# EUROPEAN PATENT SPECIFICATION

(11) **EP 3 292 187 B1**
(45) Date of publication and mention of the grant of the patent: **30.01.2019**
(21) Application number: 16722762.8
(22) Date of filing: 03.05.2016
(51) Int. Cl.: C10L 1/04

(54) **REDUCED EMISSIONS AROMATICS-CONTAINING JET FUELS**
REDUZIERTE EMISSIONEN VON AROMATHALTIGEN DÜSENTREIBSTOFFEN
CARBURÉACTEURS CONTENANT DES COMPOSÉS AROMATIQUES ET À ÉMISSIONS RÉDUITES

(30) Priority: 05.05.2015 US 201562157211 P
(43) Date of publication of application: 14.03.2018
(73) Proprietor: Shell Internationale Research Maatschappij B.V., 2596 HR The Hague (NL)
(72) Inventor: BAULDREAY, Joanna Margaret, Manchester Lancashire M22 0RR (GB); GINESTRA, Cynthia Natalie, Houston, Texas 77077 (US); HEMIGHAUS, Gregory, Richmond, California 94804 (US); DALLY, Brice Nathaniel, Madison, Wisconsin 53703 (US); BLOMMEL, Paul George, Oregon, Wisconsin 53575 (US)
(74) Representative: Shell Legal Services IP
(86) International application number: PCT/US2016/030496
(87) International publication number: WO 2016/179133

(56) References cited:
- WO-A1-2011/140560
- US-A1- 2014 163 267

## Description

### Field of the Invention

This invention relates to reducing emissions in jet fuels having aromatics content.

### Background of the Invention

Typical jet fuels are prepared in a refinery from a crude mineral oil source. Typically the crude mineral oil is separated by means of distillation into a distillate kerosene fraction boiling in the aviation fuel range. If required, these fractions are subjected to hydroprocessing to reduce sulfur and nitrogen levels.

Increasing demand for jet fuel and the environmental impact of aviation related emissions places the aviation industry at the forefront of today's global energy challenge. Perhaps more tangible than the global impact of greenhouse gases is the impact of local emissions from aircraft. Emissions near and around airports have a direct impact on the air composition and therefore have been linked with poor local air quality, which can be further linked to impacts on human health. Particulates and oxides of sulfur and nitrogen are considered to be the main contributors to poor local air quality. Thus, local air quality is seen as an integral element in the pursuit of environment-friendly fuels.

Jet fuels are continuously burned in the combustion chamber of a turbine engine by injection of liquid fuel into the rapidly flowing stream of hot air. The fuel is vaporized and burned. The hot gases produced are continuously diluted with excess air to lower their temperature to a safe operating level for the turbine.

Petroleum-derived jet fuels inherently contain both paraffinic and aromatic hydrocarbons. In general, paraffinic hydrocarbons offer the most desirable combustion cleanliness characteristics for jet fuels. Aromatics generally have the least desirable combustion characteristics for aircraft turbine fuel. In aircraft turbines aromatics tend to burn with a smoky flame and release a greater proportion of their chemical energy as undesirable thermal radiation than the other hydrocarbons.

As such, to ensure adequate combustion properties in a turbine engine, aromatics content in petroleum-derived jet fuel is typically limited to a maximum of 25 vol.% as specified by civilian and military jet fuel grade specifications including, but not limited to, the ASTM Standard Specification for Aviation Turbine Fuels (ASTM D1655) governing Jet A and Jet A-1; the United Kingdom of Ministry of Defence (UK MOD), Defence Standard (DEF STAN) 91-91 governing Jet A-1; MIL-DTL-5624V governing JP-5; MIL-DTL-83133H governing JP-8; GOST 10227 governing TS-1, T-1, T-2, and RT; and ASTM D6615 and CGSB-3.22 governing Jet B.

WO2011/140560 A1 discloses a process for preparing renewable jet fuel blendstock.

The combustion of highly aromatic jet fuels generally results in smoke and carbon or soot deposition, and it is therefore desirable to limit the total aromatic content as well as the naphthalene content in jet fuels. However, as mentioned in the ASTM Standard Specification for Aviation Turbine Fuel Containing Synthesized Hydrocarbons (ASTM D7566), recent research in support of fuels containing synthesized hydrocarbons has indicated that a minimum level of aromatics is desirable to ensure that shrinkage of aged elastomer seals and associated fuel leakage is prevented.

### Summary of the Invention

There is interest for jet fuel with equivalent total aromatics content and yet reduced particulate emissions. Such a fuel would help ensure fuel compatibility with existing aircraft systems and at the same time minimize environmental impact due to combusting jet fuel in a turbine engine as compared with combusting conventional petroleum-derived jet fuel. It has been found that it is difficult to produce a low particulate emission jet fuel that contains the required amount of aromaticity.

According to the present invention there is provided use of an aromatic kerosene fuel blending component comprising at least 90 wt.% amount of aromatics measured by ASTM D2425, less than 10 wt.% of indanes and tetralins and less than 1 wt.% of naphthalene to decrease the number-based nvPM emissions of a jet fuel while meeting Jet Fuel specification property.

According to the present invention there is further provided use of an aromatic kerosene fuel blending component comprising at least 90 wt.% amount of aromatics measured by ASTM D2425, less than 10 wt.% of indanes and tetralins and less than 1 wt.% of naphthalene to increase the smoke point of a jet fuel.

According to the present invention there is further provided use of an aromatic kerosene fuel blending component comprising at least 90 wt.% amount of aromatics measured by ASTM D2425, less than 10 wt.% of indanes and tetralins and less than 1 wt.% of naphthalene to decrease the NOx emission value of a jet fuel while meeting Jet Fuel specification property.

Described herein is a method for decreasing the number-based non-volatile particulate matter (nvPM) emissions of a jet fuel while meeting Jet Fuel specification comprising:
a. providing a quantity of petroleum-derived kerosene having a boiling point in the range of 150°C to 300°C, at atmospheric pressure, a total aromatic content in the range of 3 vol.% to 25 vol.% measured by ASTM D1319, and a density at 15°C in the range of 775 kg/m³ to 845 kg/m³;
b. providing a quantity of an aromatic kerosene fuel blending component comprising at least 90 wt.% amount of aromatics measured by D2425, less than 10 wt.% of indanes and tetralins and less than 1 wt.% of naphthalene;
c. providing a quantity of low aromatics paraffinic kerosene having at least 85 wt.% of paraffin and an aromatic content of less than 0.5 wt.% measured by ASTM D2425 and having less than 15 wt.% cycloparaffin; and
d. blending a quantity of the petroleum-derived kerosene fuel, an amount of equal to or greater than 3 vol. % to about 25 vol. %, based on the jet fuel, of the aromatic kerosene fuel blending component, and a sufficient amount of low aromatics paraffinic kerosene to maintain the total aromatics content of the jet fuel within the range of 3% to 25%.
wherein the amount of the aromatic kerosene fuel blending component is in an amount effective to produce the jet fuel having nvPM emission reduction of at least 5%, compared to the petroleum-based jet fuel at equivalent total aromatics content.

Described herein is a method for producing an aromatics-containing jet fuel having low number-based nvPM emissions while meeting Jet Fuel specification property comprising:
a. providing (i) a quantity of petroleum-derived kerosene having a boiling point in the range of 150°C to 300°C, at atmospheric pressure, a total aromatic content in the range of 3 vol.% to 25 vol.% measured by ASTM D1319, and a density at 15°C in the range of 775 kg/m³ to 845 kg/m³; and/or (ii) a quantity of low aromatics paraffinic kerosene having at least 85 wt.% of paraffin and an aromatic content of less than 0.5 wt.% measured by ASTM D2425 and having less than 15 wt.% cycloparaffin;
b. providing a quantity of aromatic kerosene fuel blending component comprising at least 90 wt.% amount of aromatics measured by D2425, less than 10 wt.% of indanes and tetralins and less than 1 wt.% of naphthalene; and
c. blending the petroleum-derived kerosene fuel and/or low aromatics paraffinic kerosene, with the aromatic kerosene fuel blending component, in an amount effective to produce a jet fuel having total aromatics content within the range of 3% to 25%.

A jet fuel prepared by the methods above and a method of operating a jet engine comprising burning the jet fuels in the jet engine are also described herein.

In any of the embodiments, the aromatic kerosene fuel blending component may be bio-derived synthetic aromatic kerosene.

In any of the methods, the method may further comprise blend another fuel component or additive for jet fuel to the blended jet fuel.

In another embodiment of the invention, use of an aromatic kerosene fuel blending component comprising at least 90 wt.% amount of aromatics measured by ASTM D2425, less than 10 wt.% of indanes and tetralins and less than 1 wt.% of naphthalene to decrease the number-based nvPM emissions of a jet fuel while meeting Jet Fuel specification property and/or decrease the NOₓ emission value of a jet fuel while meeting Jet Fuel specification property and/or to increase the smoke point of a jet fuel are also provided.

### Brief Description of the Drawings

The drawings illustrate certain aspects of some of the embodiments of the invention, and should not be used to limit or define the invention.
Fig. 1 shows the number-based nvPM emission reduction of jet fuel containing a bio-derived synthetic aromatic kerosene from Example 4a.
Fig. 2 shows the number-based nvPM emission reduction of jet fuel containing a bio-derived synthetic aromatic kerosene from Example 4b.
Fig. 3 shows the smoke point increase of jet fuel containing a bio-derived synthetic aromatic kerosene from Example 6.
Fig. 4 shows the smoke point increase of jet fuel containing a bio-derived synthetic aromatic kerosene from Example 7.

### Detailed Description of the Invention

It has been found that by providing a quantity of petroleum-derived kerosene having a boiling point in the range of 150°C to 300°C, at atmospheric pressure, a total aromatic content in the range of 3 vol.% to 25 vol.% measured by ASTM D1319, and a density at 15° C in the range of 775 kg/m³ to 845 kg/m³ (preferably meeting at least one of the Jet Fuel specifications as described below); a quantity of an aromatic kerosene fuel blending component comprising at least 90 wt.% amount of aromatics measured by D2425, less than 10 wt.% of indanes and tetralins and less than 1 wt.% of naphthalene; and a quantity of low aromatics paraffinic kerosene having at least 85 wt.% of paraffin and an aromatic content of less than 0.5 wt.% measured by ASTM D2425 and having less than 15 wt.% cycloparaffin; and blending a quantity of the petroleum-derived kerosene, an amount of equal to or greater than 3 vol.% to about 25 vol.%, based on the jet fuel, of the aromatic kerosene fuel blending component, and a sufficient amount of low aromatics paraffinic kerosene to maintain the aromatics content of the jet fuel within the range of 3% to 25%; a jet fuel having reduced number-based nvPM emissions compared to the petroleum-based jet fuel at equivalent total aromatics content may be obtained.

Further, it has been found that by providing (i) a quantity of petroleum-derived kerosene having a boiling point in the range of 150°C to 300°C, at atmospheric pressure, a total aromatic content in the range of 3 vol.% to 25 vol.% measured by ASTM D1319, and a density at 15°C in the range of 775 kg/m³ to 845 kg/m³; and/or (ii) a quantity of low aromatics paraffinic kerosene having at least 85 wt.% of paraffin and an aromatic content of less than 0.5 wt.% measured by ASTM D2425 and having less than 15 wt.% cycloparaffin; a quantity of an aromatic kerosene fuel blending component comprising at least 90 wt.% amount of aromatics measured by D2425, less than 10 wt.% of indanes and tetralins and less than 1 wt.% of naphthalene; and blending the petroleum-derived kerosene fuel and/or low aromatics paraffinic kerosene, with the aromatic kerosene fuel blending component, in an amount effective to produce a jet fuel having total aromatics content within the range of 3% to 25%; more preferably within a range of 8% to 20%; most preferably within a range of 12% to 18% aromatics-containing jet fuel having low number-based nvPM emissions may be obtained while meeting Jet Fuel specification property.

In certain embodiments, the aromatic kerosene fuel blending component may be derived from biomass or may originate from petroleum or other non-biomass resources. Aromatics content in a jet fuel can be determined by ASTM D1319. Aromatics content for synthetic blend components can be determined by ASTM D2425. Equivalent total aromatic contents between two jet fuels means the total aromatic contents measured by these methods give aromatic contents within +/- 1.5 wt.%.

The aromatic content of the blended jet fuel may be any number as long as it is within the range of 3% to 25% and does not have to be the same aromatic content as the petroleum-derived kerosene used in the blend. The reduction in emission is however measured at equivalent total aromatics content.

The method above may also produce a jet fuel having a NOₓ emissions reduction of at least 3%, preferably at least 5%, more preferably at least 7%, more preferably at least 10%, more preferably at least 15%, compared to the petroleum-based jet fuel at equivalent total aromatics content.

The method above may also produce a jet fuel having a smoke point of at least 1 mm greater than the petroleum based jet fuel as measured by ASTM D1322.

ASTM International ("ASTM") and the United Kingdom Ministry of Defense ("MOD") have taken the lead roles in setting and maintaining specification for civilian aviation turbine fuel or jet fuel. The respective specifications issued by these two organizations are very similar but not identical. Many other countries issue their own national specifications for jet fuel but are very nearly or completely identical to either the ASTM or MOD specification. ASTM D1655 is the Standard Specification for Aviation Turbine Fuels and includes specifications for Jet A and Jet A-1. ASTM D6615 is the Standard Specification for Jet B fuels. Defense Standard 91-91 is the MOD specification for Jet A-1 and is the dominant fuel specification for Jet A-1 outside USA.

Jet A-1 is the most common jet fuel and is produced to an internationally standardized set of specifications. In the United States only, Jet A is the primary grade of jet fuel. Another jet fuel that is used in civilian aviation is called Jet B. Jet B is a wide-cut, lighter fuel in the naphtha-kerosene region that is used for its enhanced cold-weather performance. Jet A and Jet A-1 are specified in ASTM D1655. Jet B is specified in ASTM D6615.

Alternatively, jet fuels are classified by militaries around the world with a different system of NATO or JP (Jet Propulsion) numbers. Some are almost identical to their civilian counterparts and differ only by the amounts of a few additives. For example, Jet A-1 is similar to JP-8 and Jet B is similar to JP-4. Other jet fuel specifications for militaries may include JP-5 and JP-7.

Jet fuel is a product boiling for more than 90 vol.% at from 130°C to 300°C (ASTMD86), having a density from 775 to 840 kg/m³, preferably from 780 to 830 kg/m³, at 15°C (e.g. ASTM D4052), an initial boiling point in the range 130°C to 160°C and a final boiling point in the range 220°C to 300°C, a kinematic viscosity at -20°C (ASTM D445) suitably from 1.2 to 8.0 mm²/s and a freeze point of below -40°C, preferably below -47°C.

Jet fuel will typically meet one of the following standards. Jet A-1 requirements in DEF STAN 91-91 (British Ministry of Defence Standard DEF STAN 91-91/Issue 7 amendment 3 of 2 Feb. 2015 (or later issues) for Turbine Fuel, Aviation "Kerosene Type," Jet A-1, NATO code F-35, Joint Service Designation AVTUR, or versions current at the time of testing) or "Check List" (Aviation Fuel Quality Requirements for Jointly Operated Systems (AFQRJOS) which is based on the most stringent requirements of ASTM D1655 for Jet A-1 and DEF STAN 91-91 plus some airport handling requirements of the IATA Guidance Material for Aviation Turbine Fuels Specifications. Jet fuel that meets the AFQRJOS is usually referred to as "Jet A-1 to Check List" or "Check List Jet A-1").

As used herein, meeting Jet Fuel specification property has the meaning that the jet fuel meets at least one of the above mentioned specifications, as determined by standard test methods, such as from ASTM, IP, or other such industry-recognized standards bodies. Such combined specification may include:

**Table 1: Combined Typical Jet Fuel Specification Properties**

| **Test** | **ASTM Method** | **Combined typical jet fuel specification properties** |
|---|---|---|
| Acidity (mgKOH/g) | D3242 | 0.1 maximum (or 0.7 mgKOH/100mL) |
| Density at 15°C (g/cm³) | D4052 | 0.750 <=> 0.845 |
| Hydrogen Content (wt.%) | D7171 | 13.4 minimum |
| Flash Point (°C) | D93 | 38 minimum |
| Freeze Point (°C) | D7153 | -40 maximum |
| Viscosity (mm²/s) | D445 | 8.0 maximum |
| Total Sulfur (wt.%) | D4294 | 0.40 maximum |
| Mercaptan sulfur (wt.%) | D3227 | 0.005 maximum |
| Smoke Point (mm) | D1322 | 18.0 minimum |
| Naphthalenes (vol.%) | D1840 | 3.0 maximum |
| Aromatics (vol.%) | D1319 | 25.0 maximum |
| Net Heat of Combustion (MJ/kg) | D3338 | 42.6 minimum |
| Initial Boiling Point (IBP) (°C) | D86 | 150 minimum |
| Final Boiling Point (FBP) (°C) | D86 | 300 maximum |

### Petroleum-Derived Kerosene

The petroleum-derived kerosene (or petroleum-based kerosene) may be any petroleum-derived jet fuel known to skilled artisans and that which can be used herein. Petroleum-derived kerosene is a liquid composed of individual hydrocarbons that typically boil within the general range of 150°C to 300°C, at atmospheric pressure (as measured by ASTM D86). Preferably the petroleum-derived kerosene is petroleum-derived kerosene that meets the Jet Fuel specification property (petroleum-derived jet fuel).

For example, petroleum-derived kerosene fuels meeting Jet A or Jet A-1 requirements and a kerosene stream used in Jet A or Jet A-1 production are listed in Table 2.

**Table 2**

| Jet fuel produced using: |
|---|
| Straight run kerosene stream. |
| Caustic washing of straight run kerosene. |
| A sweetening process such as Merox®, Merichem®, or Benderprocess. |
| Hydroprocessed jet fuel. |

As another example, the low boiling fraction as separated from a mineral gas oil may be used as such or in combination with petroleum-derived kerosene, suitably made at the same production location. As the low boiling fraction may already comply with the jet fuel specifications it is evident that the blending ratio between said component and the petroleum-derived kerosene may be freely chosen. The petroleum-derived kerosene will typically boil for more than 90 vol.% within the usual kerosene range of 130°C to 300°C (ASTM D86), depending on grade and use. It will typically have an initial boiling point in the range 130°C to 160°C and a final boiling point in the range 220°C to 300°C. It will typically have a density from 775 to 840 kg/m³, preferably from 780 to 830 kg/m³, at 15°C (e.g., ASTM D4052 or IP 365). Its kinematic viscosity at -20°C (ASTM D445) might suitably be from 1.2 to 8.0 mm²/s.

The petroleum-derived kerosene fraction may be a straight run kerosene fraction as isolated by distillation from said crude oil source or a kerosene fraction isolated from the effluent of typical refinery conversion processes, preferably hydrocracking. The kerosene fraction may also be the blend of straight run kerosene and kerosene as obtained in a hydrocracking process. Suitably the properties of the mineral derived kerosene are those of the desired jet fuel as defined above.

Aromatic content of the petroleum-derived kerosene may vary in the range of 0 to 25 vol. %, typically 15 to 20 vol. % based on the fuel (as measured by ASTM 1319). Typical density of the petroleum-derived kerosene at 15° C is in the range of 775 kg/m³ to 845 kg/m³ (as measured by D4052). Preferably the petroleum-derived kerosene is a petroleum-derived jet fuel that meets at least one of the Jet Fuel specification properties.

### Aromatic Kerosene Fuel Blending Component

In embodiments, the aromatic kerosene fuel blending component is generally characterized as a liquid composed of individual hydrocarbons useable as a jet fuel blending component and having at least the following properties: at least 90 wt.% of aromatics measured by D2425, less than 10 wt.% of indanes and tetralins and less than 1 wt.% of naphthalene (measured by D2425 or optionally can be measured by GCxGC). The aromatic kerosene fuel blending component preferably has an amount of indanes and tetralins in the range of 1 wt.% to less than 10 wt.%, and preferably 1 wt.% to less than 8 wt.%.

The aromatic kerosene fuel blending component preferably has a freezing point (as measured by ASTM D5972) of -25°C or lower, -30°C or lower, -40°C or lower, -50°C or lower, -60°C or lower, or even -70°C or lower. The aromatic kerosene fuel blending component preferably has a viscosity at 25 °C of 1 mm²/s or less.

In certain embodiments, the aromatic kerosene fuel blending component may be derived from biomass, referred to herein as a bio-derived synthetic aromatic kerosene (SAK), or may originate from petroleum or other non-biomass resources. Petroleum derived aromatic kerosene fuel blending components meeting the requirements above may include, without limitation, highly aromatic compositions derived from oil refining and/or petrochemical production, such as catalytic naphtha reforming, steam cracking of hydrocarbon feedstocks, fluid catalytic cracking (FCC), hydrocracking, coal pyrolysis to produce coke, BTX processing, aromatics alkylation processes (including those used for the manufacture of ethyl-benzene and cumene), and methanol-to-aromatics or methanol-to-gasoline processes, among others.

Alternative resources may include, without limitation, raw feedstocks of coal, natural gas, or other non-biomass feedstocks. Methods for processing such feedstocks include, without limitation, gasification, pyrolysis, combustion, liquefaction, steam reforming, cracking, partial oxidation, or combinations thereof. The raw feedstocks may be processed to produce an intermediate feedstock comprising oxygenated hydrocarbons, alkanes, alkenes, COₓ molecules, hydrogen, synthesis gas (syngas), or combinations thereof. Processes for converting an intermediate feedstock to oxygenates (such as alcohols and carboxylic acids) include, without limitation, pyrolysis, alcohol synthesis, Fisher-Tropsch synthesis, steam reforming, partial oxidation, hydroformylation, carbonylation, or combinations thereof. Other processes include systems for converting acetone to mesitylene or the conversion of ethanol and/or mixed oxygenates using any one or more of the bioreforming technologies described below in regards to biomass-derived feedstocks.

In one embodiment, the aromatic kerosene fuel blending component is a bio-derived synthetic aromatic kerosene fuel blending component (SAK) produced from a biomass feedstock or a biomass-derived feedstock.

As used herein, the term "biomass" refers to, without limitation, organic materials produced by plants (such as leaves, roots, seeds and stalks), and microbial and animal metabolic wastes. Common biomass sources include: (1) agricultural residues, including corn stover, straw, seed hulls, sugarcane leavings, bagasse, nutshells, cotton gin trash, and manure from cattle, poultry, and hogs; (2) wood materials, including wood or bark, sawdust, timber slash, and mill scrap; (3) municipal solid waste, including recycled paper, waste paper and yard clippings; and (4) energy crops, including poplars, willows, switch grass, miscanthus, sorghum, alfalfa, prairie bluestream, corn, soybean, and the like. The term also refers to the primary building blocks of the above, namely, lignin, cellulose, hemicellulose and carbohydrates, such as saccharides, sugars and starches, among others.

Common biomass-derived feedstocks include lignin and lignocellulosic derivatives, cellulose and cellulosic derivatives, hemicellulose and hemicellulosic derivatives, carbohydrates, starches, monosaccharides, disaccharides, polysaccharides, sugars, sugar alcohols, alditols, polyols, and mixtures thereof. Preferably, the biomass-derived feedstock is derived from material of recent biological origin such that the age of the compounds, or fractions containing the compounds, is less than 100 years old, preferably less than 40 years old, and more preferably less than 20 years old, as calculated from the carbon 14 concentration of the feedstock.

The biomass-derived feedstocks may be derived from biomass using any known method. Solvent-based applications are well known in the art. Organosolv processes use organic solvents such as ionic liquids, acetone, ethanol, 4-methyl-2-pentanone, and solvent mixtures, to fractionate lignocellulosic biomass into cellulose, hemicellulose, and lignin streams (Paszner 1984; Muurinen 2000; and Bozell 1998). Strong-acid processes use concentrated hydrochloric acid, phosphoric acid, sulfuric acid or other strong organic acids as the depolymerization agent, while weak acid processes involve the use of dilute strong acids, acetic acid, oxalic acid, hydrofluoric acid, or other weak acids as the solvent. Enzymatic processes have also recently gained prominence and include the use of enzymes as a biocatalyst to decrystalize the structure of the biomass and allow further hydrolysis to useable feedstocks.

In one embodiment, the SAK is derived from the conversion of a biomass-derived feedstock containing one or more carbohydrates, such as starch, monosaccharides, disaccharides, polysaccharides, sugars, and sugar alcohols, or derivatives from lignin, hemicellulose and cellulose using a bioreforming processes. As used herein, the term "bioreforming" refers to, without limitation, processes for catalytically converting biomass-derived oxygenated hydrocarbons to lower molecular weight hydrocarbons and oxygenated compounds using aqueous phase reforming, hydrogenation, hydrogenolysis, hydrodeoxygenation and/or other conversion processes involving the use of heterogeneous catalysts. Bioreforming also includes the further catalytic conversion of such lower molecular weight oxygenated compounds to C₄₊ compounds. In one embodiment, the SAK may be derived from fractions resulting from any one or more pyrolysis technologies for converting biomass to fuels or chemicals.

In its application, a bioreforming process is used to convert oxygenated hydrocarbons to an intermediate stream of mixed oxygenates, with the resulting mixed oxygenates subsequently converted to C₄₊ compounds containing the desired SAK component. "Oxygenated hydrocarbons" generically refers to hydrocarbon compounds having the general formula C*ₐ*H*_{b}*O*_{d}*, wherein *a* represents two or more carbon atoms and *d* represents at least one oxygen atom (collectively, referred to herein as C₂₊O₁₊ hydrocarbons). Preferably, the oxygenated hydrocarbon has 2 to 12 carbon atoms (C₂₋₁₂O₁₋₁₁ hydrocarbon), and more preferably 2 to 6 carbon atoms (C₂₋₆O₁₋₆ hydrocarbon). The oxygenated hydrocarbon may also have an oxygen-to-carbon ratio ranging from 0.07 to 1.0, including ratios of 0.08, 0.09, 0.10, 0.16, 0.20, 0.25, 0.3, 0.33, 0.4, 0.5, 0.6, 0.7, 0.75, 0.8, 0.9, and other ratios between.

In general, the oxygenated hydrocarbon will include any one or more sugars, such as glucose, fructose, sucrose, maltose, lactose, mannose or xylose, or sugar alcohols, such as arabitol, erythritol, glycerol, isomalt, lactitol, malitol, mannitol, sorbitol, xylitol, arabitol, glycol, and other oxygenated hydrocarbons. Additional non-limiting examples of oxygenated hydrocarbons include various alcohols, ketones, aldehydes, furans, hydroxy carboxylic acids, carboxylic acids, diols and triols. Alcohols may include, without limitation, primary, secondary, linear, branched or cyclic C₂₊ alcohols, such as ethanol, n-propyl alcohol, isopropyl alcohol, butyl alcohol, isobutyl alcohol, butanol, isobutanol, pentanol, cyclopentanol, hexanol, cyclohexanol, 2-methyl-cyclopentanonol, heptanol, octanol, nonanol, decanol, undecanol, dodecanol, and isomers thereof. The ketones may include, without limitation, hydroxyketones, cyclic ketones, diketones, acetone, propanone, 2-oxopropanal, butanone, butane-2,3-dione, 3-hydroxybutan-2-one, pentanone, cyclopentanone, pentane-2,3-dione, pentane-2,4-dione, hexanone, cyclohexanone, 2-methyl-cyclopentanone, heptanone, octanone, nonanone, decanone, undecanone, dodecanone, methylglyoxal, butanedione, pentanedione, diketohexane, and isomers thereof. The aldehydes may include, without limitation, hydroxyaldehydes, acetaldehyde, propionaldehyde, butyraldehyde, pentanal, hexanal, heptanal, octanal, nonal, decanal, undecanal, dodecanal, and isomers thereof. The carboxylic acids may include, without limitation, formic acid, acetic acid, propionic acid, butanoic acid, pentanoic acid, hexanoic acid, heptanoic acid, and isomers and derivatives thereof, including hydroxylated derivatives, such as 2-hydroxybutanoic acid and lactic acid. The diols may include, without limitation, ethylene glycol, propylene glycol, 1,3-propanediol, butanediol, pentanediol, hexanediol, heptanediol, octanediol, nonanediol, decanediol, undecanediol, dodecanediol, and isomers thereof. The triols may include, without limitation, glycerol, 1,1,1 tris(hydroxymethyl)-ethane (trimethylolethane), trimethylolpropane, hexanetriol, and isomers thereof. Cyclic ethers, furans and furfurals include, without limitation, furan, tetrahydrofuran, dihydrofuran, 2-furan methanol, 2-methyl-tetrahydrofuran, 2,5-dimethyl-tetrahydrofuran, 2-methyl furan, 2-ethyl-tetrahydrofuran, 2-ethyl furan, hydroxylmethylfurfural, 3-hydroxytetrahydrofuran, tetrahydro-3-furanol, 2,5-dimethyl furan, 5-hydroxymethyl-2(5H)-furanone, dihydro-5-(hydroxymethyl)-2(3H)-furanone, tetrahydro-2-furoic acid, dihydro-5-(hydroxymethyl)-2(3H)-furanone, tetrahydrofurfuryl alcohol, 1-(2-furyl)ethanol, hydroxymethyltetrahydrofurfural, and isomers thereof.

"Oxygenates" generically refers to hydrocarbon compounds having 1 or more carbon atoms and between 1 and 3 oxygen atoms (referred to herein as C₁₊O₁₋₃ hydrocarbons), such as alcohols, ketones, aldehydes, furans, hydroxy carboxylic acids, carboxylic acids, diols and triols. Preferably, the oxygenates have from 1 to 6 carbon atoms, or 2 to 6 carbon atoms, or 3 to 6 carbon atoms. Alcohols may include, without limitation, primary, secondary, linear, branched or cyclic C₁₊ alcohols, such as methanol, ethanol, n-propyl alcohol, isopropyl alcohol, butyl alcohol, isobutyl alcohol, butanol, pentanol, cyclopentanol, hexanol, cyclohexanol, 2-methyl-cyclopentanonol, heptanol, octanol, nonanol, decanol, undecanol, dodecanol, and isomers thereof. The ketones may include, without limitation, hydroxyketones, cyclic ketones, diketones, acetone, propanone, 2-oxopropanal, butanone, butane-2,3-dione, 3-hydroxybutan-2-one, pentanone, cyclopentanone, pentane-2,3-dione, pentane-2,4-dione, hexanone, cyclohexanone, 2-methyl-cyclopentanone, heptanone, octanone, nonanone, decanone, undecanone, dodecanone, methylglyoxal, butanedione, pentanedione, diketohexane, and isomers thereof. The aldehydes may include, without limitation, hydroxyaldehydes, acetaldehyde, propionaldehyde, butyraldehyde, pentanal, hexanal, heptanal, octanal, nonal, decanal, undecanal, dodecanal, and isomers thereof. The carboxylic acids may include, without limitation, formic acid, acetic acid, propionic acid, butanoic acid, pentanoic acid, hexanoic acid, heptanoic acid, isomers and derivatives thereof, including hydroxylated derivatives, such as 2-hydroxybutanoic acid and lactic acid. The diols may include, without limitation, lactones, ethylene glycol, propylene glycol, 1,3-propanediol, butanediol, pentanediol, hexanediol, heptanediol, octanediol, nonanediol, decanediol, undecanediol, dodecanediol, and isomers thereof. The triols may include, without limitation, glycerol, 1,1,1 tris(hydroxymethyl)-ethane (trimethylolethane), trimethylolpropane, hexanetriol, and isomers thereof. Furans and furfurals include, without limitation, furan, tetrahydrofuran, dihydrofuran, 2-furan methanol, 2-methyl-tetrahydrofuran, 2,5-dimethyl-tetrahydrofuran, 2-methyl furan, 2-ethyl-tetrahydrofuran, 2-ethyl furan, hydroxylmethylfurfural, 3-hydroxytetrahydrofuran, tetrahydro-3-furanol, 2,5-dimethyl furan, 5-hydroxymethyl-2(5H)-furanone, dihydro-5-(hydroxymethyl)-2(3H)-furanone, tetrahydro-2-furoic acid, dihydro-5-(hydroxymethyl)-2(3H)-furanone, tetrahydrofurfuryl alcohol, 1-(2-furyl)ethanol, hydroxymethyltetrahydrofurfural, and isomers thereof.

Oxygenates are prepared by reacting an aqueous solution containing the oxygenated hydrocarbons with hydrogen over a deoxygenation catalyst. The hydrogen facilitates the reaction and conversion process by immediately reacting with the various reaction intermediates and the catalyst to produce products that are more stable and less subject to degradation. The hydrogen may be generated *in situ* using aqueous phase reforming (*in situ-generated* H₂ or APR H2), whether in the biomass liquefaction reactor or in downstream processes using the biomass hydrolyzate as a feedstock, or a combination of APR H₂, external H₂ or recycled H₂, or just simply external H₂ or recycled H₂. The term "external H₂" refers to hydrogen that does not originate from the biomass solution, but is added to the reactor system from an external source. The term "recycled H₂" refers to unconsumed hydrogen which is collected and then recycled back into the reactor system for further use. External H₂ and recycled H₂ may also be referred to collectively or individually as "supplemental H₂." In general, the amount of H₂ added should maintain the reaction pressure within the system at the desired levels, or to increase the molar ratio of hydrogen to carbon and/or oxygen in order to enhance the production yield of certain reaction product types.

The deoxygenation catalyst is preferably a heterogeneous catalyst having one or more materials capable of catalyzing a reaction between hydrogen and the oxygenated hydrocarbon to remove one or more of the oxygen atoms from the oxygenated hydrocarbon to produce alcohols, ketones, aldehydes, furans, carboxylic acids, hydroxy carboxylic acids, diols and triols. In general, the materials will be adhered to a support and may include, without limitation, Cu, Re, Fe, Ru, Ir, Co, Rh, Pt, Pd, Ni, W, Os, Mo, Ag, Au, alloys and combinations thereof. The deoxygenation catalyst may include these elements alone or in combination with one or more Mn, Cr, Mo, W, V, Nb, Ta, Ti, Zr, Y, La, Sc, Zn, Cd, Ag, Au, Sn, Ge, P, Al, Ga, In, Tl, Ce and combinations thereof. In one embodiment, the deoxygenation catalyst includes Pt, Ru, Cu, Re, Co, Fe, Ni, W or Mo. In yet another embodiment, the deoxygenation catalyst includes Sn, Fe or Re and at least one transition metal selected from Ir, Ni, Pd, P, Rh, Pt and Ru. In another embodiment, the catalyst includes Fe, Re and at least Cu or one Group VIIIB transition metal. The support may be any one of the supports further described below, including a nitride, carbon, silica, alumina, zirconia, titania, tungsten, vanadia, ceria, zinc oxide, chromia, boron nitride, heteropolyacids, kieselguhr, hydroxyapatite, and mixtures thereof. The deoxygenation catalyst may also be atomically identical to the liquefaction catalyst and/or the APR catalyst.

The deoxygenation catalyst may also be a bi-functional catalyst. For example, acidic supports (e.g., supports having low isoelectric points) are able to catalyze dehydration reactions of oxygenated compounds, followed by hydrogenation reactions on metallic catalyst sites in the presence of H₂, again leading to carbon atoms that are not bonded to oxygen atoms. The bi-functional dehydration/hydrogenation pathway consumes H₂ and leads to the subsequent formation of various polyols, diols, ketones, aldehydes, alcohols and cyclic ethers, such as furans and pyrans. Catalyst examples include tungstated zirconia, titania zirconia, sulfated zirconia, acidic alumina, silica-alumina, zeolites and heteropolyacid supports.

Loading of the first element (i.e., Cu, Re, Fe, Ru, Ir, Co, Rh, Pt, Pd, Ni, W, Os, Mo, Ag, Au, alloys and combinations thereof) is in the range of 0.25 wt.% to 25 wt.% on carbon, with weight percentages of 0.10% and 0.05% increments between, such as 1.00%, 1.10%, 1.15%, 2.00%, 2.50%, 5.00%, 10.00%, 12.50%, 15.00% and 20.00%. The preferred atomic ratio of the second element (i.e., Mn, Cr, Mo, W, V, Nb, Ta, Ti, Zr, Y, La, Sc, Zn, Cd, Ag, Au, Sn, Ge, P, Al, Ga, In, Tl, Ce, and combinations thereof) is in the range of 0.25-to-1 to 10-to-1, including any ratios between, such as 0.50, 1.00, 2.50, 5.00, and 7.50-to-1. If the catalyst is adhered to a support, the combination of the catalyst and the support is from 0.25 wt. % to 10 wt. % of the primary element.

In certain bioreforming processes, a poison-tolerant catalyst may be particularly desirable when reacting soluble carbohydrates derived from cellulosic biomass solids which have not had catalyst poisons removed. As used herein the term "poison-tolerant catalyst" refers to a catalyst that is capable of bioreforming without needing to be regenerated or replaced due to low catalytic activity for at least about 12 hours of continuous operation. In some embodiments, suitable poison-tolerant catalysts may include, for example, sulfided catalysts. Suitable sulfided catalysts are described in United States Patent Application Publications US20120317872, US20130109896, US20120317873, and US20140166221. Alternatively, processes described in US Patent 8921629 may be used for bioreforming,

The feedstock solution is reacted with hydrogen in the presence of the deoxygenation catalyst at deoxygenation temperature and pressure conditions, and weight hourly space velocity, effective to produce the desired oxygenates. The deoxygenation temperature and pressure are preferably selected to maintain at least a portion of the feedstock in the liquid phase at the reactor inlet. It is recognized, however, that temperature and pressure conditions may also be selected to more favorably produce the desired products in the vapor-phase. In general, the reaction should be conducted at process conditions wherein the thermodynamics of the proposed reaction are favorable. For instance, the minimum pressure required to maintain a portion of the feedstock in the liquid phase will likely vary with the reaction temperature. As temperatures increase, higher pressures will generally be required to maintain the feedstock in the liquid phase, if desired. Pressures above that required to maintain the feedstock in the liquid phase (i.e., vapor-phase) are also suitable operating conditions.

In condensed phase liquid reactions, the pressure within the reactor must be sufficient to maintain the reactants in the condensed liquid phase at the reactor inlet. For liquid phase reactions, the reaction temperature may be from about 80°C to 300°C, and the reaction pressure from about 72 psig to 1300 psig. In one embodiment, the reaction temperature is between about 120°C and 300°C, or between about 200°C and 280°C, or between about 220°C and 260°C, and the reaction pressure is preferably between about 72 and 1200 psig, or between about 145 and 1200 psig, or between about 200 and 725 psig, or between about 365 and 700 psig, or between about 600 and 650 psig.

For vapor phase reactions, the reaction should be carried out at a temperature where the vapor pressure of the oxygenated hydrocarbon is at least about 0.1 atm (and preferably a good deal higher), and the thermodynamics of the reaction are favorable. This temperature will vary depending upon the specific oxygenated hydrocarbon compound used, but is generally in the range of from about 100°C to 600°C for vapor phase reactions. Preferably, the reaction temperature is between about 120°C and about 300°C, or between about 200°C and about 280°C, or between about 220°C and about 260°C.

In one embodiment, the deoxygenation temperature is between about 100°C and 400°C, or between about 120°C and 300°C, or between about 200°C and 280°C, and the reaction pressure is preferably between about 72 and 1300 psig, or between about 72 and 1200 psig, or between about 200 and 725 psig, or between about 365 and 700 psig.

A condensed liquid phase method may also be performed using a modifier that increases the activity and/or stability of the catalyst system. It is preferred that the water and the oxygenated hydrocarbon are reacted at a suitable pH of from about 1.0 to about 10.0, including pH values in increments of 0.1 and 0.05 between, and more preferably at a pH of from about 4.0 to about 10.0. Generally, the modifier is added to the feedstock solution in an amount ranging from about 0.1% to about 10% by weight as compared to the total weight of the catalyst system used, although amounts outside this range are included within the present invention.

In general, the reaction should be conducted under conditions where the residence time of the feedstock solution over the catalyst is appropriate to generate the desired products. For example, the WHSV for the reaction may be at least about 0.1 gram of oxygenated hydrocarbon per gram of catalyst per hour, and more preferably the WHSV is about 0.1 to 40.0 g/g hr, including a WHSV of about 0.25, 0.5, 0.75, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 6, 7, 8, 9, 10, 11, 12, 13, 14, 15, 20, 25, 30, 35, 40 g/g hr, and ratios between (including 0.83, 0.85, 0.85, 1.71, 1.72, 1.73, etc.).

The hydrogen used in the deoxygenation reaction may be *in-situ-generated* H₂, external H₂, recycled H₂, or a combination of the foregoing. The amount (moles) of external H₂ introduced to the feedstock is between 0 - 100%, 0 - 95%, 0 - 90%, 0 - 85%, 0 - 80%, 0 - 75%, 0 - 70%, 0 - 65%, 0 - 60%, 0 - 55%, 0 - 50%, 0 - 45%, 0 - 40%, 0 - 35%, 0 - 30%, 0 - 25%, 0 - 20%, 0 - 15%, 0 - 10%, 0 - 5%, 0 - 2%, or 0 - 1% of the total number of moles of the oxygenated hydrocarbon(s) in the feedstock, including all intervals between. When the feedstock solution, or any portion thereof, is reacted with APR hydrogen and external H₂, the molar ratio of APR hydrogen to external H₂ is at least 1:100, 1:50, 1:20; 1:15, 1:10, 1:5; 1:3, 1:2, 1:1, 2:1, 3:1, 5:1, 10:1, 15:1, 20:1, 50:1, 100:1 and ratios between (including 4:1, 6:1, 7:1, 8:1, 9:1, 11:1, 12:1, 13:1, 14:1, 15:1, 16:1, 17:1, 18:1 and 19:1, and vice-versa).

The resulting intermediate stream containing the oxygenates is further converted into C₄₊ compounds in the presence of an oxygenate conversion catalyst in a reactor under conditions of temperature and pressure effective to convert a portion of the oxygenates to aromatic hydrocarbons. The oxygenate conversion catalyst has one or more acidic materials capable of catalyzing the conversion of oxygenates to the desired aromatic hydrocarbons. The conversion catalyst may include, without limitation, aluminosilicates (zeolites), silica-alumina phosphates (SAPO), aluminum phosphates (ALPO), amorphous silica alumina, zirconia, sulfated zirconia, tungstated zirconia, titania, acidic alumina, phosphated alumina, phosphated silica, sulfated carbons, phosphated carbons, heteropolyacids, and combinations thereof. In one embodiment, the catalyst may also include a modifier, such as Ce, Y, Sc, La, P, B, Bi, Li, Na, K, Rb, Cs, Mg, Ca, Sr, Ba, and combinations thereof. The catalyst may also be modified by the addition of a metal, such as Cu, Ag, Au, Pt, Ni, Fe, Co, Ru, Zn, Cd, Ga, In, Rh, Pd, Ir, Re, Mn, Cr, Mo, W, Sn, Os, alloys and combinations thereof, to provide metal functionality, and/or oxides of Ti, Zr, V, Nb, Ta, Mo, Cr, W, Mn, Re, Al, Ga, In, Fe, Co, Ir, Ni, Si, Cu, Zn, Sn, Cd, P, and combinations thereof. The conversion catalyst may be self-supporting or adhered to any one of the supports further described below, including supports containing carbon, silica, alumina, zirconia, titania, vanadia, ceria, heteropolyacids, alloys and mixtures thereof. Ga, In, Zn, Fe, Mo, Ag, Au, Ni, P, Sc, Y, Ta, and lanthanides may also be exchanged onto zeolites to provide a zeolite catalyst. The term "zeolite" as used herein refers not only to microporous crystalline aluminosilicate but also for microporous crystalline metal-containing aluminosilicate structures, such as galloaluminosilicates and gallosilicates. Metal functionality may be provided by metals such as Cu, Ag, Au, Pt, Ni, Fe, Co, Ru, Zn, Cd, Ga, In, Rh, Pd, Ir, Re, Mn, Cr, Mo, W, Sn, Os, alloys and combinations thereof.

Examples of suitable zeolite catalysts include ZSM-5, ZSM-11, ZSM-12, ZSM-22, ZSM-23, ZSM-35 and ZSM-48. Zeolite ZSM-5, and the conventional preparation thereof, is described in U.S. Patent Nos. 3702886; Re. 29,948 (highly siliceous ZSM-5); 4100262 and 4139600. Zeolite ZSM-11, and the conventional preparation thereof, is described in U.S. Patent No. 3709979. Zeolite ZSM-12, and the conventional preparation thereof, is described in U.S. Patent No. 3832449. Zeolite ZSM-23, and the conventional preparation thereof, is described in U.S. Patent No. 4076842. Zeolite ZSM-35, and the conventional preparation thereof, is described in U.S. Patent No. 4016245. Another preparation of ZSM-35 is described in U.S. Patent No. 4107195. ZSM-48, and the conventional preparation thereof, is taught by U.S. Patent No. 4375573. Other examples of zeolite catalysts are described in U.S. Patent 5019663 and U.S. Patent 7022888.

As described in U.S. Patent 7022888, the acid catalyst may be a bifunctional pentasil zeolite catalyst including at least one metallic element from the group of Cu, Ag, Au, Pt, Ni, Fe, Co, Ru, Zn, Cd, Ga, In, Rh, Pd, Ir, Re, Mn, Cr, Mo, W, Sn, Os, alloys and combinations thereof, or a modifier from the group of Ga, In, Zn, Fe, Mo, Au, Ag, Y, Sc, Ni, P, Ta, lanthanides, and combinations thereof. The zeolite may be used with reactant streams containing an oxygenated hydrocarbon at a temperature of below 600°C. The zeolite may have ZSM-5, ZSM-8 or ZSM-11 type crystal structure consisting of a large number of 5-membered oxygen-rings, i.e., pentasil rings. The zeolite with ZSM-5 type structure is a particularly preferred catalyst.

The catalyst may optionally contain any binder such as alumina, silica or clay material. The catalyst can be used in the form of pellets, extrudates and particles of different shapes and sizes. In one aspect, the oxygenate conversion catalysts are ZSM-5 and beta zeolite.

In general, the oxygenate conversion temperature is between about 250°C and 550°C, preferably between about 300°C and 500°C, and most preferably between about 320°C and 480°C. The oxygenate conversion pressure ranges from below atmospheric pressure up to about 1000 psig, preferably from about atmospheric pressure to about 700 psig, and more preferably from about 10 psig to about 500 psig. In general, the reaction should be conducted under conditions where the residence time of the dehydrogenation products over the oxygenate conversion catalyst is appropriate to generate the desired hydrocarbons. For example, the residence time may be established at a weight hourly space velocity (WHSV) of between 0.01 and 30, or between 0.05 and 10, or between 0.1 and 5, or between 1.0 and 4.

The condensation reactions result in the production of C₄₊ alkanes, C₄₊ alkenes, C₅₊ cycloalkanes, C₅₊ cycloalkenes, aryls, fused aryls, C₄₊ alcohols, C₄₊ ketones, and mixtures thereof. The C₄₊ alkanes and C₄₊ alkenes have from 4 to 30 carbon atoms (C₄₋₃₀ alkanes and C₄₋₃₀ alkenes) and may be branched or straight chained alkanes or alkenes. The C₄₊ alkanes and C₄₊ alkenes may also include fractions of C₄₋₉, C₇₋₁₄, C₁₂₋₂₄ alkanes and alkenes, respectively, with the C₄₋₉ fraction directed to gasoline, the C₇₋₁₄ fraction directed to the SAK jet fuel component, and the C₁₂₋₂₄ fraction directed to diesel fuel and other industrial applications. Examples of various C₄₊ alkanes and C₄₊ alkenes include, without limitation, butane, butane, pentane, pentene, 2-methylbutane, hexane, hexane, 2-methylpentane, 3-methylpentane, 2,2-dimethylbutane, 2,3-dimethylbutane, heptane, heptene, octane, octene, 2,2,4,-trimethylpentane, 2,3-dimethyl hexane, 2,3,4-trimethylpentane, 2,3-dimethylpentane, nonane, nonene, decane, decene, undecane, undecene, dodecane, dodecene, tridecane, tridecene, tetradecane, tetradecene, pentadecane, pentadecene, hexadecane, hexadecane, heptyldecane, heptyldecene, octyldecane, octyldecene, nonyldecane, nonyldecene, eicosane, eicosene, uneicosane, uneicosene, doeicosane, doeicosene, trieicosane, trieicosene, tetraeicosane, tetraeicosene, and isomers thereof.

The C₅₊ cycloalkanes and C₅₊ cycloalkenes have from 5 to 30 carbon atoms and may be unsubstituted, mono-substituted or multi-substituted. In the case of mono-substituted and multi-substituted compounds, the substituted group may include a branched C₃₊ alkyl, a straight chain C₁₊ alkyl, a branched C₃₊ alkylene, a straight chain C₁₊ alkylene, a straight chain C₂₊ alkylene, a phenyl or a combination thereof. In one embodiment, at least one of the substituted groups include a branched C₃₋₁₂ alkyl, a straight chain C₁₋₁₂ alkyl, a branched C₃₋₁₂ alkylene, a straight chain C₁₋₁₂ alkylene, a straight chain C₂₋₁₂ alkylene, a phenyl or a combination thereof. In yet another embodiment, at least one of the substituted groups include a branched C₃₋₄ alkyl, a straight chain C₁₋₄ alkyl, a branched C₃₋₄ alkylene, straight chain C₁₋₄ alkylene, straight chain C₂₋₄ alkylene, a phenyl or a combination thereof. Examples of desirable C₅₊ cycloalkanes and C₅₊ cycloalkenes include, without limitation, cyclopentane, cyclopentene, cyclohexane, cyclohexene, methyl-cyclopentane, methyl-cyclopentene, ethyl-cyclopentane, ethyl-cyclopentene, ethyl-cyclohexane, ethyl-cyclohexene, and isomers thereof.

Aryls will generally consist of an aromatic hydrocarbon in either an unsubstituted (phenyl), mono-substituted or multi-substituted form. In the case of mono-substituted and multi-substituted compounds, the substituted group may include a branched C₃₊ alkyl, a straight chain C₁₊ alkyl, a branched C₃₊ alkylene, a straight chain C₂₊ alkylene, a phenyl or a combination thereof. In one embodiment, at least one of the substituted groups include a branched C₃₋₁₂ alkyl, a straight chain C₁₋₁₂ alkyl, a branched C₃₋₁₂ alkylene, a straight chain C₂₋₁₂ alkylene, a phenyl or a combination thereof. In yet another embodiment, at least one of the substituted groups include a branched C₃₋₄ alkyl, a straight chain C₁₋₄ alkyl, a branched C₃₋₄ alkylene, straight chain C₂₋₄ alkylene, a phenyl or a combination thereof. Examples of various aryls include, without limitation, benzene, toluene, xylene (dimethylbenzene), ethyl benzene, para xylene, meta xylene, ortho xylene, C₉₊ aromatics, butyl benzene, pentyl benzene, hexyl benzene, heptyl benzene, oxtyl benzene, nonyl benzene, decyl benzene, undecyl benzene, and isomers thereof.

Fused aryls will generally consist of bicyclic and polycyclic aromatic hydrocarbons, in either an unsubstituted, mono-substituted or multi-substituted form. In the case of mono-substituted and multi-substituted compounds, the substituted group may include a branched C₃₊ alkyl, a straight chain C₁₊ alkyl, a branched C₃₊ alkylene, a straight chain C₂₊ alkylene, a phenyl or a combination thereof. In another embodiment, at least one of the substituted groups include a branched C₃₋₄ alkyl, a straight chain C₁₋₄ alkyl, a branched C₃₋₄ alkylene, straight chain C₂₋₄ alkylene, a phenyl or a combination thereof. Examples of various fused aryls include, without limitation, naphthalene, anthracene, tetrahydronaphthalene, and decahydronaphthalene, indane, indene, and isomers thereof.

The resulting C₄₊ compounds are fractionated to produce the synthetic aromatic kerosene fuel blending component, as well as other co-products useful in other applications. Various fractionation techniques are common known in the art and may be employed to ensure that the SAK component maintains those properties important to its performance as a jet fuel blend component as provided in the present invention. Examples of such fractionation techniques may include atmospheric distillation, vacuum distillation, trays, or structured packing.

In embodiments, fractionation is used to control the volatility of the SAK such that the finished product has a flash point of greater than 38°C or 40°C or 42°C as measured by ASTM D56. By fractionating the C₄₊ compounds based on a flash point of greater than 38°C, the SAK will generally maintain a carbon number range of mostly C₉₊ compounds with less than 5% or less than 2% of the product being C₈₋ compounds.

Fractionation can also be used to control the composition of the naphthalene content of the stream. For example, fractionation techniques can be used so that the finished SAK component has a final boiling point of less than 215°C or 210°C or 205°C as measured by ASTM D86. By fractionating the C₄₊ compounds based on a final boiling point of less than 215°C, the naphthalene content of the SAK will generally be less than 1%. In practice, the fractionation could also be controlled by evaluating the naphthalene content directly rather than boiling point. ASTM D2425, ASTM D1840, or other common gas chromatography methods may be used to verify naphthalene content below 1%. In general, a less than 215°C final boiling point and less than 1% naphthalene content correspond to a carbon number range of mostly C₁₁₋ with less than 1% of the product being C₁₂₊. Taken together with the flash point control, in certain embodiments, the SAK may include primarily a C₉ - C₁₁ fraction of the C₄₊ compounds.

### Synthetic Paraffinic Kerosene

The low aromatics synthetic paraffinic kerosene fuel component in the jet boiling range typically contains at least 99.5 wt.% hydrocarbon, said hydrocarbon being at least 98.5 wt.% paraffins, less than 1wt% bicyclic compounds, and less than 0.5 wt.% total aromatics as measured by as measured by ASTM D2425. Such paraffin may be linear or branched or may contain cyclic groups. Preferably the distillation of jet range is nominally 150°C to -300°C measured by ASTM D86. The paraffinic kerosene fuel component has a carbon and hydrogen content of greater than 99.5 wt.% measured by ASTM D5291 and preferably contains normal, iso-, and mono-cyclic paraffins of greater than 98.5 wt.% as measured by ASTM D2425 and less than 1 wt.% bicyclic aromatic and/or paraffinic material measured by ASTM D2425.

A synthetic paraffinic kerosene fuel preferably has the properties as described in Tables A1.1 and A1.2 of ASTM D7566 (Standard Specification for Aviation Turbine Fuel containing Synthesized Hydrocarbons) namely a density at 15°C of from 0.730 to 0.770 g/cm³ (ASTM D4052) and a sulfur content of 15 ppmw (parts per million by weight) or less (ASTM D2622 or D5453).

The low aromatics synthetic paraffinic kerosene fuel component may be a Fischer-Tropsch derived fuel component or bio-derived fuel component or derived from other feedstocks. The low aromatics paraffinic kerosene may have at least 85 wt.% of paraffin and an aromatic content of less than 0.5 wt.% measured by ASTM D2425 and having less than 15 wt.% cycloparaffin (ASTM D2425).

By "Fischer-Tropsch derived" is meant that a fuel is, or derives from, a synthesis product of a Fischer-Tropsch condensation process. The term "non-Fischer-Tropsch derived" may be interpreted accordingly. The Fischer-Tropsch reaction converts carbon monoxide and hydrogen into long chain, usually paraffinic, hydrocarbons:

*n*(CO+2H₂)=(-CH₂-)*ₙ*+*n*H₂O+heat,

in the presence of an appropriate catalyst and typically, but not always, at elevated temperatures, for example 125°C to 300°C, preferably 175°C to 250°C, and/or pressures, for example 5 to 100 bar (72 psig to 1450 psig), preferably 12 to 50 bar (174 psig to 725 psig). Hydrogen:carbon monoxide ratios other than 2:1 may be employed if desired.

The carbon monoxide and hydrogen may themselves be derived from organic or inorganic, natural or synthetic sources, typically from coal, biomass, for example wood chips, residual fuel fractions or more preferably natural gas or from organically derived methane. A Fischer-Tropsch derived fuel is sometimes referred to as a GTL (Gas-to-Liquids) fuel because the most commonly published source of carbon monoxide and hydrogen is natural gas. When in the context of the present invention reference is made to a GTL fuel, also coal or biomass derived fuels are meant.

A Fischer-Tropsch derived kerosene fraction may be obtained directly from the Fischer-Tropsch reaction, or indirectly, for instance by fractionation and hydroprocessing of Fischer-Tropsch synthesis products. Hydroprocessing can involve hydrocracking to adjust the boiling range as for example described in GBB2077289 and EPA0147873, and/or hydroisomerization which can improve cold flow properties by increasing the proportion of branched paraffins. EPA0583836 describes a two-step hydroprocessing process in which a Fischer-Tropsch synthesis product is firstly subjected to hydroconversion under conditions such that it undergoes substantially no isomerization of hydrocracking (this hydrogenates the olefinic and oxygen-containing components), and then at least part of the resultant product is hydroconverted under conditions such that hydrocracking and isomerization occur to yield a substantially paraffinic hydrocarbon fuel. The desired kerosene fraction(s) or gas oil fraction may subsequently be isolated for instance by distillation.

Typical catalysts for the Fischer-Tropsch synthesis of paraffinic hydrocarbons comprise, as the catalytically active component, a metal from Group VIII or the periodic table, in particular ruthenium, iron, cobalt or nickel. Suitable such catalysts are described for instance in EPA0583836. The Fischer-Tropsch reactor may be for example a multi-tubular reactor or a slurry reactor.

An example of a Fischer-Tropsch based process is the SMDS (Shell Middle Distillate Synthesis Process) described in "The Shell Middle Distillate Synthesis Process," van der Burgt et al., The Institute of Petroleum, Petroleum Review, pgs 204-209, April 1990. The process (also sometimes referred to as the Shell "Gas-To-Liquids" or "GTL" technology) produces middle distillate range products by conversion of a natural gas (primarily methane) derived synthesis gas into a heavy long chain hydrocarbon (paraffin) wax, which can then be hydroconverted and fractionated to produce liquid transport fuels such as the kerosene fractions used in the present invention. Versions of the SMDS process are currently in use in Bintulu, Malaysia and Qatar. Kerosene and gas oil fractions prepared by the SMDS process are commercially available for instance from Shell companies.

By virtue of the Fischer-Tropsch process, a Fischer-Tropsch derived kerosene or gas oil fraction has essentially no, or undetectable levels of, sulfur and nitrogen. Compounds containing these heteroatoms tend to act as poisons for Fischer-Tropsch catalysts and are therefore removed from the synthesis gas feed. This can yield additional benefits, in terms of effect on catalyst performance, in fuel compositions herein.

Further, the Fischer-Tropsch process as usually operated produces no or virtually no aromatic components. The aromatics content of a Fischer-Tropsch derived fuel, suitably determined by ASTM D2425, will typically be below 1% w/w, preferably below 0.5% w/w and more preferably below 0.1% w/w.

Generally speaking, Fischer-Tropsch derived kerosene and gas oil fractions have relatively low levels of polar components, in particular polar surfactants, for instance compared to petroleum-derived fuels. It is believed that this can contribute to improved antifoaming and dehazing performance in the final automotive gas oil fuel. Such polar components may include for example oxygenates, and sulfur and nitrogen containing compounds. A low level of sulfur in a Fischer-Tropsch derived fuel is generally indicative of low levels of both oxygenates and nitrogen containing compounds, since all are removed by the same treatment processes.

The synthetic paraffinic kerosene fuel component may also be bio-derived from sources such as algae and other plants or rendered animal fats. Fatty acids from such bio-derived oil source may be hydrotreated to produce the synthetic paraffinic kerosene fuel component. Sources and jet usage of bio-derived synthetic paraffinic kerosenes for example were tested and discussed in an industry report, "Evaluation of Bio-Derived Synthetic Paraffinic Kerosene (Bio-SPK)", published June 2009 by The Boeing Company. As an example, HEFA (Hydroprocessed Esters and Fatty Acids) is a synthetic paraffinic kerosene (HEFA-SPK) produced by catalytic hydroprocessing of esters or fatty acids. These esters are typically triglycerides of carboxylic acids with chain lengths of 8 to 20 or more carbons. The HEFA properties are specified in ASTM Specification D7566 Annex A2.

### Other Components

Optionally, the fuel composition may further comprise a fuel additive known to a person of ordinary skill in the art. In certain embodiments, the fuel additive can be used from about 0.00005% by weight to about 0.20 % by volume, based on the total weight or volume of the fuel composition. The fuel additive can be any fuel additive known to those of skill in the art. In further embodiments, the fuel additive may be antioxidants, thermal stability improvers, lubricity improvers, fuel system icing inhibitors, metal deactivators, static dissipaters and combinations thereof.

The amount of a fuel additive in the fuel composition disclosed herein may be from about 0.00005% by weight to less than about 0.20% by volume, based on the total amount of the fuel composition. In some embodiments, the amount is in wt. % based on the total weight of the fuel composition. In other embodiments, the amount is in vol. % based on the total volume of the fuel composition.

Illustrative examples of fuel additives are described in greater detail below. Lubricity improvers are one example. They were first used in aviation fuels as corrosion inhibitors, to protect ferrous metals in fuel handling systems such as pipelines, and fuel storage tanks, from corrosion. It was discovered that they also provided additional lubricity performance, reducing the wear in components of the aircraft engine fuel system such as gear pumps and splines, where thin fuel layers separate moving metal components. Nowadays these additives are only used for lubricity improvement. The lubricity improver may be present in the fuel composition at a concentration up to about 23 mg/L, based on the total weight of the fuel composition, and in accordance with jet fuel specification limits.

Antioxidants prevent the formation of gum depositions on fuel system components caused by oxidation of fuels in storage and/or inhibit the formation of peroxide compounds in certain fuel compositions can be used herein. The antioxidant may be present in the fuel composition at a concentration up to 24 mg/L, based on the total weight of the fuel composition.

Static dissipaters reduce the effects of static electricity generated by movement of fuel through high flow-rate fuel transfer systems. The static dissipater may be present in the fuel composition at a concentration up to about 5 mg/L, based on the total weight of the fuel composition.

Fuel system icing inhibitors (also referred to as anti-icing additive) reduce the freezing point of water precipitated from jet fuels due to cooling at high altitudes and prevent the formation of ice crystals which restrict the flow of fuel to the engine. Certain fuel system icing inhibitors can also act as a biocide. The fuel system icing inhibitor may be present intentionally in the fuel composition at a concentration from about 0.02 to about 0.2 volume %, based on the total weight of the fuel composition.

Metal deactivators suppress the catalytic effect of some metals, particularly copper, have on fuel oxidation. The metal deactivator may be present in the fuel composition at a concentration up to about 5.7 mg/L active matter, based on the total weight of the fuel composition.

Thermal stability improvers are used to inhibit deposit formation in the high temperature areas of the aircraft fuel system. The thermal stability improver may be present in the fuel composition at a concentration up to about 256 mg/L, based on the total weight of the fuel composition.

### Blending and Using

In certain embodiments, a jet fuel is prepared by blending (a) the petroleum-derived kerosene, (b) an amount of equal to or greater than 3 vol. % to about 25 vol. %, based on the jet fuel, of the aromatic kerosene fuel blending component, preferably bio-derived synthetic aromatic kerosene, and (c) a sufficient amount of low aromatics paraffinic kerosene to maintain the aromatics content of the jet fuel within the range of 3% to 25%; more preferably within a range of 8% to 20%; most preferably within a range of 12% to 18%. In certain other embodiments, (a) the petroleum-derived kerosene and/or the low aromatics paraffinic kerosene, and (b) an amount of equal to or greater than 3 vol. % to about 25 vol. %, based on the jet fuel, of the aromatic kerosene fuel blending component, preferably bio-derived synthetic aromatic kerosene, are blended in an amount effective to maintain the aromatics content of the jet fuel within the range of 3% to 25%; more preferably within a range of 8% to 20%; most preferably within a range of 12% to 18%.

The amount of the aromatic kerosene fuel is in an amount effective to produce a jet fuel having number-based nvPM emission reduction of at least 5%, preferably at least 7%, more preferably at least 10%, compared to the petroleum-based jet fuel at equivalent total aromatics content. More preferably, the amount of the aromatic kerosene fuel blending component is in an amount effective to produce a jet fuel having NOₓ emission reductions of at least 1%, at least 2%, at least 3%, preferably at least 5%, more preferably at least 7%, more preferably at least 10%, more preferably at least 15%, compared to the petroleum-based jet fuel at equivalent total aromatics content. More preferably, the amount of the aromatic kerosene fuel blending component is in an amount effective to produce a jet fuel having a smoke point of at least 1 mm, preferably at least 2mm, more preferably at least 3mm, greater than the petroleum based jet fuel as measured by ASTM D1322. The smoke point of the resulting blended jet fuel is at least 18mm, preferably at least 19mm, more preferably at least 20mm, more preferably at least 22mm, most preferably at least 25mm.

The blending may be carried out in any order to produce the final jet fuel blend so long as the total aromatic content is in the range of 3% to 25%; more preferably within a range of 8% to 20%; most preferably within a range of 12% to 18%, based on the jet fuel blend. The components a) and b) or a), b) and c) may be blended in any order. For example, the jet fuel may be blended by either:
(i) combining at least a portion of the petroleum-derived kerosene with at least a portion of the low aromatics paraffinic kerosene before blending with the aromatic kerosene fuel blending component; or
(ii) combining at least a portion of the aromatic kerosene fuel blending component with at least a portion of the low aromatics paraffinic kerosene before blending with the petroleum-derived kerosene fuel; or
(iii) combining at least a portion of the petroleum-derived kerosene with at least a portion of the aromatic kerosene fuel blending component before blending with the low aromatics paraffinic kerosene. Alternatively, at least a portion of the petroleum-derived kerosene, at least a portion of the aromatic kerosene fuel blending component, and the low aromatics paraffinic kerosene may be blended at the same time.

The amount of low aromatics paraffinic kerosene may typically be in the range of 9 to 97 vol.%, preferably 24 to 92 vol.%, more preferably 36 to 88 vol.% when containing at least 3 components, based on the jet fuel blend. The amount of petroleum-derived kerosene fuel may typically be less than 88 vol.%, preferably less than 68 vol.%, more preferably less than 52 vol.% when containing at least 3 components, based on the jet fuel blend. The amount of aromatic kerosene fuel blending component may typically be in the range of 3 vol.% to 25 vol.%; preferably within a range of 8 vol.% to 20 vol.%, based on the jet fuel blend. The remainder of the blend being components other than the aromatic kerosene fuel blending component as long as the aromatic content of the fuel blend is in the range of 3 vol.% to 25 vol.%; more preferably within a range of 8 vol.% to 20 vol.%; most preferably within a range of 12 vol.% to 18 vol.%.

Other components, if any, may be added after the blending described above, or during any of the stages of blending.

There is also described herein a jet fuel composition made by any of the processes described above.

In some embodiments, the jet fuel composition has a flash point greater than about 32°C, greater than about 33°C, greater than about 34°C, greater than about 35°C, greater than about 36°C, greater than about 37°C, greater than about 38°C, greater than about 39°C, greater than about 40°C, greater than about 41°C, greater than about 42°C, greater than about 43°C, or greater than about 44°C. In other embodiments, the jet fuel composition has a flash point greater than 38°C. In certain embodiments, the flash point of the jet fuel composition disclosed herein is measured according to ASTM D 56. In other embodiments, the flash point of the jet fuel composition disclosed herein is measured according to ASTM D 93. In further embodiments, the flash point of the jet fuel composition disclosed herein is measured according to ASTM D 3828-98. In still further embodiments, the flash point of the jet fuel composition disclosed herein is measured according to any conventional method known to a skilled artisan for measuring flash point of fuels.

In some embodiments, the jet fuel composition has a density at 15°C from about 775 kg/m³ to about 840 kg/m³. In certain embodiments, the density of the jet fuel composition disclosed herein is measured according to ASTM D4052. In further embodiments, the density of the jet fuel composition disclosed herein is measured according to any conventional method known to a skilled artisan for measuring density of fuels.

In some embodiments, the jet fuel composition has a freezing point that is lower than -40°C, lower than -50°C, lower than -60°C, lower than -70°C, or lower than -80°C. In other embodiments, the jet fuel composition has a freezing point from about -80°C to about -30°C, from about -75°C to about -35°C, from about -70°C to about -40°C, or from about -65°C to about -45°C. In certain embodiments, the freezing point of the jet fuel composition disclosed herein is measured according to ASTM D 2386. In further embodiments, the freezing point of the jet fuel composition disclosed herein is measured according to any conventional method known to a skilled artisan for measuring freezing point of fuels.

In some embodiments, the jet fuel composition has an initial boiling point that is from about 140°C to about 170°C. In other embodiments, the jet fuel composition has a final boiling point that is from about 180°C to about 300°C. In still other embodiments, the jet fuel composition has an initial boiling point that is from about 140°C to about 170°C, and a final boiling point that is from about 180°C to about 300°C. In certain embodiments, the fuel jet composition meets the specification distillation requirement using method ASTM D 86.

In some embodiments, the jet fuel composition has a Jet Fuel Thermal Oxidation Tester (jet fuel thermal stability test) (ASTM D3241) temperature that is equal to or greater than 260°C, or equal to or greater than 265°C. In some embodiments, the jet fuel composition has a viscosity at -20°C that is less than 6 mm²/sec, less than 7 mm²/sec, or less than or equal to 8 mm²/sec. In certain embodiments, the viscosity of the jet fuel composition disclosed herein is measured according to ASTM D 445.

In some embodiments, the jet fuel composition meets the Jet Fuel specification property described above or any of the standard specifications for Aviation Turbine fuels described above.

The emissions reduction and/or smoke point increase can be seen by operating a jet engine comprising burning the jet fuel produced by the method described above in such jet engine.

A fuel system is described herein comprising a fuel tank containing the fuel composition produced by the methods described above. Optionally, the fuel system may further comprise an engine cooling system having a recirculating engine coolant, a fuel line connecting the fuel tank with the internal combustion engine, and/or a fuel filter arranged on the fuel line. Some non-limiting examples of internal combustion engines include reciprocating engines (e.g., diesel engines), jet engines, some rocket engines, and gas turbine engines.

In some embodiments, the fuel tank is arranged with said cooling system so as to allow heat transfer from the recirculating engine coolant to the fuel composition contained in the fuel tank. In other embodiments, the fuel system further comprises a second fuel tank containing a second fuel for a jet engine and a second fuel line connecting the second fuel tank with the engine. Optionally, the first and second fuel lines can be provided with electromagnetically operated valves that can be opened or closed independently of each other or simultaneously. In further embodiments, the second fuel is a Jet A.

An engine arrangement is described herein comprising an internal combustion engine, a fuel tank containing the fuel composition disclosed herein, a fuel line connecting the fuel tank with the internal combustion engine. Optionally, the engine arrangement may further comprise a fuel filter and/or an engine cooling system comprising a recirculating engine coolant. In some embodiments, the internal combustion engine is a jet engine.

The emissions reduction and/or smoke point increase can be seen by burring the jet fuel produced by the methods described above by providing the jet fuel to the fuel system and/or jet engine and operating such fuel system and/or jet engine.

As used herein, a "low" or "lower" in the context of jet fuel properties embraces any degree of decrease or reduction compared to an average commercial petroleum jet fuel property containing equivalent total aromatics content under the same or equivalent conditions.

As used herein, a "high" or "higher" in the context of jet fuel properties embraces any degree of increase compared to an average commercial petroleum jet fuel property containing equivalent total aromatics content under the same or equivalent conditions.

As used herein, an "increase" in the context of jet fuel properties embraces any degree of increase compared to a previously measured jet fuel property under the same or equivalent conditions. Thus, the increase is suitably compared to the jet fuel property of the fuel composition prior to incorporation of the aromatic kerosene fuel blending component. Alternatively, the property increase may be measured in comparison to an otherwise analogous jet fuel composition (or batch or the same fuel composition); for example, which is intended (e.g. marketed) for use in a jet turbine engine, without adding the synthetic aromatic kerosene fuel blending component to it.

As used herein, a "decrease" or "reduction" in the context of jet fuel properties embraces any degree of decrease or reduction compared to a previously measured jet fuel property under the same or equivalent conditions. Thus, the decrease or reduction is suitably compared to the property of the jet fuel composition prior to incorporation of the aromatic kerosene fuel blending component. Alternatively, the property decrease may be measured in comparison to an otherwise analogous jet fuel composition (or batch or the same fuel composition); for example, which is intended (e.g. marketed) for use in a jet turbine engine, without adding the aromatic kerosene fuel blending component to it.

In the context of the present invention, "use" of an aromatic kerosene fuel blending component in a jet fuel composition means incorporating the component into the jet fuel, typically as a blend (i.e. a physical mixture) with one or more jet fuel components and optionally with one or more jet fuel additives.

Accordingly, in one embodiment of the invention, there is provided the use of the aromatic kerosene fuel blending component, preferably bio-derived synthetic aromatic kerosene, for the purpose of decreasing emissions, particularly, the number-based nvPM emissions of a jet fuel while meeting Jet Fuel specification.

Accordingly, in another embodiment of the invention, there is provided the use of the aromatic kerosene fuel blending component, preferably bio-derived synthetic aromatic kerosene, for the purpose of decreasing NOₓ emission of a jet fuel while meeting Jet Fuel specification.

Accordingly, in another embodiment of the invention, there is provided the use of the aromatic kerosene fuel blending component, preferably bio-derived synthetic aromatic kerosene, for the purpose of increasing the smoke point of a jet fuel while meeting Jet Fuel specification.

Suitably, the aromatic kerosene fuel blending component is used in an amount to increase the smoke point to preferably at least 1 mm greater than the petroleum based jet fuel as measured by ASTM D1322 (automated method), preferably at least 2mm, more preferably at least 3mm, greater than the petroleum based jet fuel as measured by ASTM D1322, and/or decrease the number-based nvPM emissions preferably by at least 5%, preferably at least 7%, more preferably at least 10%, and/or decrease the NOₓ preferably by at least 1%, at least 2%, at least 3%, preferably at least 5%, more preferably at least 7%, more preferably at least 10%, more preferably at least 15%. When using a jet fuel composition disclosed herein, a jet airplane equipped with a jet turbine engine, a fuel tank containing the jet fuel composition disclosed herein, and a fuel line connecting the fuel tank with the jet turbine engine. Thus, a jet engine may be operated by burning in such jet engine a jet fuel described herein.

### Illustrative Examples

### Text Methods

### Jet Fuel Specification Tests and Methods

A jet fuel can be verified to meet a given specification by testing the fuel's properties specified by the governing specification. Table 3 summarizes typical jet fuel properties and typical test methods required by specifications:

**Table 3: Jet Fuel Specification Properties and Test Methods**

| **Test** | **ASTM Method** |
|---|---|
| Acidity (mgKOH/g) | D3242 |
| Density @ (15 °C) (g/cm³) | D4052 |
| Hydrogen Content (wt.%) | D7171 |
| Flash Point (°C) | D93 |
| Freeze Point (°C) | D7153 |
| Total Sulfur - Xray (wt.%) | D4294 |
| Mercaptan sulfur (wt.%) | D3227 |
| Smoke Point (mm) | D1322 |
| Naphthalenes (vol.%) | D1840 |
| Aromatics (vol.%) | D1319 |
| Heat of Combustion (MJ/kg) | D3338 |
| IBP (°C) | D86 |
| FBP (°C) | D86 |

### Number-Based and Mass-Based nvPM Emission Test Method

Non-Volatile Particulate Matter (nvPM) is characterized by particle number and particle mass. Both properties are measured using a system that meets the requirements of SAE Aerospace Information Report (AIR) 6241, the current best practice for turbine engine emissions measurement. The nvPM number measurement is made using an AVL Particle Counter. The nvPM mass measurement is made using either an Atrium Laser Induced Incandescence instrument or an AVL Micro Soot Sensor instrument.

### NOₓ Test Method

Nitrogen oxides (NOₓ) measurements can be made using a SEMTECH-DS non-dispersive ultraviolet absorption instrument. The concentrations are converted to emission indices using the procedure outlined in the Society of Automotive Engineering Aerospace Recommended Practice 1533A (SAE, 2004).

### Materials

### Comparative Example A

A petroleum-derived jet fuel sourced from the Motiva Convent Terminal near Convent, LA is provided as Comparative Example A. Its specification properties are summarized in Table 4.

**Table 4: Specification Properties of Comparative Example A Jet Fuel**

| **Test** | **ASTM Method** | **Comparative Example A** |
|---|---|---|
| Acidity (mgKOH/g) | D3242 | 0.001 |
| Density at 15°C (g/cm³) | D4052 | 0.802 |
| Hydrogen Content (wt.%) | D5291 | 14.06 |
| Flash Point (°C) | D56 | 46.0 |
| Freeze Point (°C) | D5972 | -43.4 |
| Viscosity (mm²/s) | D445 | 4.9 |
| Total Sulfur (wt.%) | D2622 | 0.13 |
| Mercaptan sulfur (wt.%) | D3227 | 0.0014 |
| Smoke Point (mm) (automated) | D1322 | 24.5 |
| Naphthalenes (vol.%) | D1840 | 1.74 |
| Aromatics (vol.%) | D1319 | 17.1 |
| Net Heat of Combustion (MJ/kg) | D3338 | 43.3 |
| Distillation Temperature at 10% Boiling Point (°C) | D86 | 180 |
| Final Boiling Point (°C) | D86 | 266 |

### Comparative Example B

A petroleum-derived jet fuel sourced from the Motiva Dallas Terminal near Dallas, TX is provided as Comparative Example B. Its specification properties are summarized in Table 5.

**Table 5: Specification Properties of Comparative Example B Jet Fuel**

| **Test** | **ASTM Method** | **Comparative Example B** |
|---|---|---|
| Acidity (mgKOH/g) | D3242 | 0.001 |
| Density at 15°C (g/cm³) | D4052 | 0.798 |
| Hydrogen Content (wt.%) | D5291 | 14.01 |
| Flash Point (°C) | D56 | 45 |
| Freeze Point (°C) | D5972 | -43.2 |
| Viscosity (mm²/s) | D445 | 4.3 |
| Total Sulfur (wt.%) | D4294 | 0.14 |
| Mercaptan sulfur (wt.%) | D3227 | 0.0007 |
| Smoke Point (mm) | D1322 | 24.3 |
| Naphthalenes (vol.%) | D1840 | 1.28 |
| Aromatics (vol.%) | D1319 | 17.3 |
| Net Heat of Combustion (MJ/kg) | D3338 | 43.3 |
| Distillation Temperature at 10% Boiling Point (°C) | D86 | 176.2 |
| Final Boiling Point (°C) | D86 | 274.4 |

### Examples

### Example 1- Production of Synthesized Aromatic Kerosene (SAK)

A three step catalytic bioreforming process utilizing hydrogenation, aqueous phase reforming and acid condensation was used to convert beet sugar to an aromatic-rich organic product. Hydrogenation was used to convert the beet sugar to a sugar alcohol feedstock, which was then converted to oxygenates using an APR deoxygenation catalyst. The resulting intermediate stream of oxygenates was then converted to the desired C₄₊ compounds using an acid condensation catalyst as the oxygenate conversion catalyst.

The hydrogenation catalyst was prepared with a ruthenium metal loading on a carbon support. The APR deoxygenation catalyst was prepared with a platinum and palladium metal loading on a zirconia support. The AC oxygenate conversion catalyst was prepared with a nickel metal loading on a ZSM-5 zeolite support.

The catalysts were loaded into separate fixed-bed, tubular reactors that were configured in series such that the liquid product from one step was fed to the next step. A 50% beet sugar in water mixture by weight was fed across the system with the process conditions shown in Table 6.

**Table 6: Start of Run Conditions for Hydrogenation, APR and AC**

| | | Hydrogenation | APR | AC |
|---|---|---|---|---|
| WHSV | wt_{feed}/(wt_{catalyst} hr) | 2.2 | 0.9 | 0.8 |
| Added Hydrogen | mol_{H2}/mol_{feed} | 2.5 | 1.0 | -- |
| Average Reactor Temperature | °C | 125 | 232 | 355 |
| Pressure | psig | 1250 | 1050 | 75 |

The product composition of the full range of liquid organic product is shown in Table 7. To produce the targeted kerosene fraction of SAK, a series of fractionation steps was required to satisfy volatility and composition requirements. Standard distillation techniques produce an SAK fraction that is primarily C₉ - C₁₁ to meet targets for flash point and poly-nuclear aromatics (PNA), which include naphthalenes. The organic liquid phase was collected and analyzed using both gas chromatograph with mass spectrometry detection and flame ionization detection. A comparison of the SAK to the Full Range material is shown in Table 7.

**Table 7: Liquid Organic Product Composition - Full Range and SAK Fraction**

| Speciation | | Full Range Pre-fractionation | SAK Fraction Post-fractionation |
|---|---|---|---|
| Aromatics | wt % | 65.0 | 99.1 |
| Paraffins | wt % | 22.4 | 0.4 |
| Olefins | wt % | 3.6 | 0.1 |
| PNA | wt % | 2.7 | 0.0 |
| Cycloparaffins | wt % | 4.6 | 0.1 |
| Other | wt % | 1.6 | 0.2 |
| Total | wt % | 100.0 | 99.9 |
| Carbon Number | | | |
| C4- | wt % | 7.8 | 0.0 |
| C5-C8 | wt % | 59.7 | 1.1 |
| C9-C11 | wt % | 30.2 | 98.8 |
| C12+ | wt % | 2.4 | 0.0 |
| Total | wt % | 100.0 | 99.9 |

The SAK fraction was also analyzed by ASTM D2425. The results are shown in Table 8. Note the absence of naphthalene, acenaphthenes, and acenaphthylenes and low quantity of alkyl naphthalene.

**Table 8: SAK Composition by ASTM D2425**

| Hydrocarbon Types | D2425 | SAK Fraction |
|---|---|---|
| Paraffins | wt % | -- |
| Monocycloparaffins | wt % | -- |
| Dicycloparaffins | wt % | -- |
| Tricycloparaffins | wt % | -- |
| Alkylbenzenes | wt % | 94.9 |
| Indanes/Tetralins | wt % | 5.0 |
| Indenes | wt % | -- |
| Naphthalene | wt % | -- |
| Naphthalene, Alkyl | wt % | 0.1 |
| Acenaphthenes | wt % | -- |
| Acenaphthylenes | wt % | -- |
| Tricyclic Aromatics | wt % | -- |

The SAK fraction had a freeze point (measured by ASTM D5972) of -77°C or less, a viscosity (measured by ASTM D445 at -20°C of 1.91 mm²/s, and a viscosity at 25°C of 0.8949 mm²/s (determined by first measuring Dynamic Viscosity by ASTM D7042, and then converting Dynamic Viscosity to Kinematic Viscosity by using the following relation per D7042: Kinematic Viscosity = (Dynamic Viscosity) / Density where Dynamic Viscosity and Density (0.8674 g/cm³) were measured at 25°C.

Standard base wash techniques were also used to reduce oxygenate content in the organic fraction. To reduce the oxygenate content, a solution of 5 - 10% potassium hydroxide in water was contacted with the organic fraction. The base was maintained at a pH of >8 to decrease the amount of organic acids in the organic phase, and a pH of >11 was maintained to decrease the amount of phenolic compounds in the organic phase.

The process was run to produce greater than 450 liters (118 gallons) of SAK for product testing. The product was stored and homogenized in a single storage tank, and then dispensed and shipped in three 55 gallon drums. 20 milligrams per liter of butylated hydroxyltoluene (BHT) anti-oxidant additive was added to each drum prior to shipment, as is standard fuel handling practice for jet fuel.

### Example 2- Production of SAK Using Lignocellulosic Feedstocks

A corn stover biomass material deconstructed using a dilute acid enzyme treatment, a common technique used to solubilize sugars from cellulose and hemicellulose while also solubilizing a portion of lignin as well, was used to produce an SAK jet fuel component. Prior to its use, the original hydrolysate was filtered to remove particulates, ion exchanged to remove a majority of ash contaminants, and dewatered to concentrate the carbon containing fraction to 60% by weight, with the balance being water.

A two-step catalytic process utilizing aqueous phase reforming and acid condensation was used to convert the hydrolysate to an aromatic-rich organic product. The APR deoxygenation catalyst was prepared to include palladium, molybdenum and tin on a zirconia support. The AC catalyst was prepared with a nickel metal loading on a ZSM-5 zeolite support.

Thee catalysts were loaded into separate fixed-bed, tubular reactors that were configured in series, such that the liquid product from one step was fed to the next step. The hydrolysate was fed across the system with the process conditions shown in **Table 9.**

**Table 9. Process Conditions for APR and AC**

| | | APR | AC |
|---|---|---|---|
| WHSV | wt_{feed}/(wt_{catalyst} hr) | 0.25 | 0.4 |
| Added Hydrogen | mol_{H2}/mol_{feed} | 2.0 | -- |
| Average Reactor Temperature | °C | 212.5 | 385 |
| Pressure | psig | 1050 | 100 |

The product composition of the full range liquid organic product is shown in Table 10. The organic liquid phase was collected and analyzed using both gas chromatograph with mass spectrometry detection and flame ionization detection. The Full Range column from Table 7 in Example 1 is included to show the similarity of the product from both feedstock sources. Using the distillation and base wash techniques described in Example 1, the aromatic-rich product generated from corn stover can readily be made into SAK with nearly identical composition and physical properties.

**Table 10. Liquid organic product composition - Feedstock comparison**

| Speciation | | Example 1 Beet Sugar | Example 2 Corn Stover |
|---|---|---|---|
| Aromatics | wt % | 65.0 | 62.9 |
| Paraffins | wt % | 22.4 | 19.0 |
| Olefins | wt % | 3.6 | 3.1 |
| PNA | wt % | 2.7 | 7.5 |
| Cycloparaffins | wt % | 4.6 | 3.7 |
| Other | wt % | 1.6 | 3.8 |
| Total | wt % | 100.0 | 100.0 |
| Carbon Number | | | |
| C4- | wt % | 7.8 | 8.9 |
| C5-C8 | wt % | 59.7 | 56.7 |
| C9-C11 | wt % | 30.2 | 31.1 |
| C12+ | wt % | 2.4 | 3.4 |
| Total | wt % | 100.0 | 100.0 |

### Example 3 - nvPM Number and Mass Emissions and NOₓ Emissions Measured from Comparative Example A and Jet Fuel Blends

Comparative Example A and various jet fuel blends were combusted in a Microturbo TRS-18 turbojet engine under simulated altitude atmospheric temperature and pressure conditions. nvPM number and mass emissions were measured using an Aerospace Information Report (AIR) 6241 compliant system as specified by the Society of Automotive Engineers (SAE) Aircraft Exhaust Emissions Measurement Committee (E-31) for the measurement of non-volatile particulate matter (nvPM) from gas turbine engines (Reference: SAE Aerospace Information Report (AIR) 6241. Procedure for the Continuous Sampling and Measurement of Non-Volatile Particle Emissions from Aircraft Turbine Engines, 2013, SAE International, Warrendale, PA. Nitrogen oxides (NOₓ) measurements were made using a SEMTECH-DS non-dispersive ultraviolet absorption instrument. The concentrations were converted to emission indices using the procedure outlined in the Society of Automotive Engineering Aerospace Recommended Practice 1533A (SAE, 2004).

### Example 4a - Reduction in nvPM Number and Mass Emissions (17 vol.% total aromatic content)

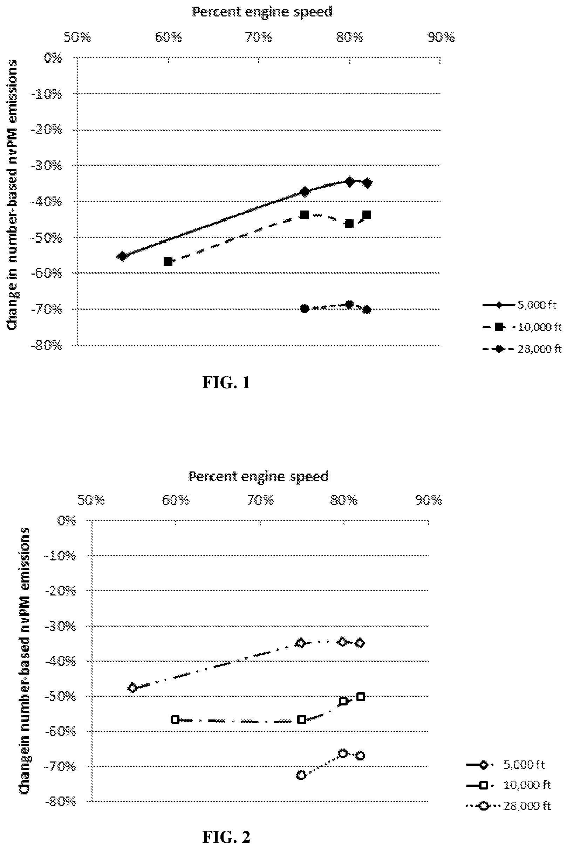

Figure 1 shows the number-based nvPM emission reductions of jet fuel containing a bio-derived SAK described in Example 1 blended with a commercial HEFA-SPK as compared to Comparative Example A. In this Example, both jet fuels contained 17 vol. % total aromatics content, and observed reductions in number-based nvPM emissions ranged approximately from 34% to 70%. The data are presented as a function of percent engine speed for simulated altitudes of 5,000 ft, 10,000 ft, and 28,000 ft. Reductions in mass-based nvPM emissions were also observed and are summarized in Table 11.

**Table 11: Change in Mass-Based nvPM emissions of SAK-Containing Jet Fuel as Compared to Comparative Example A (17 vol.% total aromatic content)**

| Simulated altitude | Percent engine speed | Change in mass-based nvPM emissions |
|---|---|---|
| 5,000 ft | 55% | -22% |
| 5,000 ft | 75% | -52% |
| 5,000 ft | 80% | -51% |
| 5,000 ft | 82% | -51% |
| 10,000 ft | 60% | -24% |
| 10,000 ft | 75% | -56% |
| 10,000 ft | 80% | -61% |
| 10,000 ft | 82% | -47% |
| 28,000 ft | 75% | -20% |
| 28,000 ft | 80% | -26% |
| 28,000 ft | 82% | -20% |

### Example 4b - Reduction in nvPM Number and Mass Emissions (9 vol.% total aromatic content)

Figure 2 shows the number-based nvPM emission reductions of jet fuel containing a bio-derived SAK described in Example 1 and a commercial HEFA-SPK as compared to a jet fuel containing Comparative Example A and the same HEFA-SPK, both jet fuels having equivalent total aromatics. In this Example, both jet fuels contained 9 vol.% total aromatics content, and observed reductions in number-based nvPM emissions ranged approximately from 34% to 73%. The data are presented as a function of percent engine speed for simulated altitudes of 5,000 ft, 10,000 ft, and 28,000 ft. Reductions in mass-based nvPM emissions were also observed and are summarized in Table 12.

**Table 12: Change in Mass-Based nvPM Emissions of SAK-Containing Jet Fuel as Compared to a Jet Fuel Containing Comparative Example A and HEFA-SPK (9 vol.% total aromatic content)**

| Simulated altitude | Percent engine speed | Change in mass-based nvPM emissions |
|---|---|---|
| 5,000 ft | 55% | -26% |
| 5,000 ft | 75% | -38% |
| 5,000 ft | 80% | -32% |
| 5,000 ft | 82% | -37% |
| 10,000 ft | 75% | -40% |
| 10,000 ft | 80% | -30% |
| 10,000 ft | 82% | -37% |
| 28,000 ft | 75% | -9% |
| 28,000 ft | 80% | -19% |
| 28,000 ft | 82% | -10% |

### Example 5a - Reduction in NOₓ emissions (17 vol.% total aromatics)

Table 13 shows the NOₓ emission reductions of a jet fuel containing a bio-derived SAK described in Example 1 and a HEFA-SPK as compared to Comparative Example A, both jet fuels having equivalent total aromatic contents of 17 vol.%.

**Table 13: Change in NOₓ Emissions of SAK-Containing Jet Fuel as Compared to Comparative Example A (17 vol.% total aromatic content)**

| Simulated altitude | Percent engine speed | Change in NOₓ emissions |
|---|---|---|
| 5,000 ft | 55% | -15% |
| 5,000 ft | 75% | -13% |
| 5,000 ft | 80% | -13% |
| 5,000 ft | 82% | -11% |
| 10,000 ft | 60% | -7% |
| 10,000 ft | 75% | -11% |
| 10,000 ft | 80% | -11% |
| 10,000 ft | 82% | -11% |
| 28,000 ft | 75% | -11% |
| 28,000 ft | 80% | -15% |
| 28,000 ft | 82% | -16% |

### Example 5b - Reduction in NOₓ Emissions (9 vol.% total aromatics)

Table 14 shows the NOₓ emission reductions of a jet fuel containing a bio-derived SAK described in Example 1 and the same HEFA-SPK as compared to a jet fuel containing Comparative Example A and a HEFA-SPK, both jet fuels having equivalent total aromatic contents of 9 vol.%.

**Table 14: Change in NOₓ Emissions of SAK-Containing Jet Fuel as Compared to a Jet Fuel Containing Comparative Example A and HEFA-SPK (9 vol.% total aromatic content)**

| Simulated Altitude | Percent Engine Speed | Change in NOₓ Emissions |
|---|---|---|
| 5,000 ft | 55% | -17% |
| 5,000 ft | 75% | -11% |
| 5,000 ft | 80% | -10% |
| 5,000 ft | 82% | -9% |
| 10,000 ft | 60% | -10% |
| 10,000 ft | 75% | -7% |
| 10,000 ft | 80% | -8% |
| 10,000 ft | 82% | -9% |
| 28,000 ft | 75% | -11% |
| 28,000 ft | 80% | -10% |
| 28,000 ft | 82% | -9% |

### Example 6 - Improvement in Smoke Point

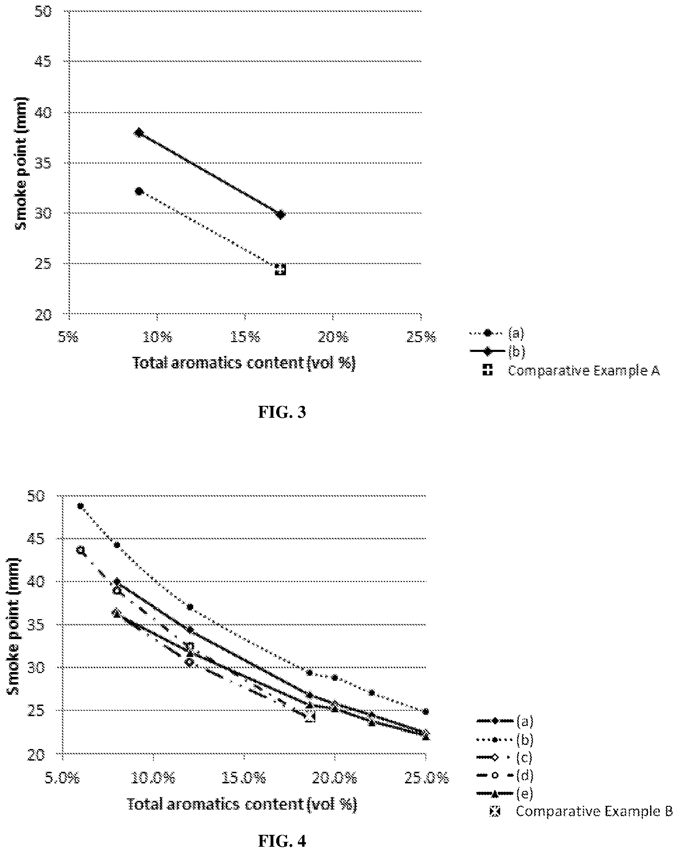

Figure 3 compares the smoke points of jet fuels containing one of the following two-component combinations:
(a) a bio-derived SAK and a HEFA-SPK;
(b) Comparative Example A and a HEFA-SPK;

Also included for comparison is the smoke point of Comparative Example A, a neat petroleum-derived jet fuel. All jet fuel blends in this Example were prepared with the proportions of SAK from Example 1 above, HEFA-SPK (commercial), and/or Comparative Example A required to achieve target total aromatic contents. The data in Figure 3 are presented as a function of total aromatics content and demonstrate higher smoke points for jet fuels containing a bio-derived SAK (see jet fuels (a)) as compared to blends containing only petroleum-derived aromatics (see jet fuels (b) and Comparative Example A).

Jet fuel (a), representing the extreme case where all petroleum-derived aromatics in Comparative Example A are replaced with SAK, exhibited a 22.0% higher or 5.4mm higher smoke point as compared to the Comparative Example A containing the equivalent total aromatics content of 17 vol.%. Thus, a jet fuel containing SAK, Comparative Example A, and a HEFA-SPK will exhibit a smoke point up to 22.0% higher or 5.4mm higher than that of Comparative Example A.

### Example 7 - Improvement in Smoke Point

Figure 4 compares the smoke points of jet fuels containing one of the following two-component or three-component combinations:
(c) a bio-derived SAK and a HEFA-SPK;
(d) a bio-derived SAK and an FT-SPK;
(e) Comparative Example B and a HEFA-SPK;
(f) Comparative Example B and an FT-SPK;
(g) a bio-derived SAK, Comparative Example B, and a HEFA-SPK.

Also included for comparison is the smoke point of Comparative Example B, a neat petroleum-derived jet fuel. All jet fuel blends in this Example were prepared with the proportions of SAK from Example 1 above, HEFA-SPK (commercial), FT-SPK (commercial), and/or Comparative Example B required to achieve target total aromatic contents. The data in 4 are presented as a function of total aromatics content and demonstrate higher smoke points for all blends containing a bio-derived SAK (see jet fuels (a), (b), and (e)) as compared to blends containing only petroleum-derived aromatics (see jet fuels (c), (d), and Comparative Example B).Furthermore, jet fuel (e) exhibited a 6.2% higher or 1.5mm higher smoke point as compared to the Comparative Example B containing the equivalent total aromatics content of 18.6 vol.%. Jet fuel (a) represented the extreme case where all petroleum-derived aromatics in Comparative Example B are replaced with SAK, resulting in a jet fuel containing SAK and HEFA-SPK; this resulted in a 10.2% higher or 2.6mm higher smoke point as compared to Comparative Example B containing the equivalent total aromatics content of 18.6 vol.%.

Similarly, jet fuel (b) represented the extreme case where all petroleum-derived aromatics in Comparative Example B are replaced with SAK, resulting in a jet fuel containing SAK and FT-SPK; this resulted in a 21.4% higher or 5.2mm higher smoke point as compared to Comparative Example B containing the equivalent total aromatics content of 18.6 vol.%. Thus, a jet fuel containing SAK, Comparative Example B, and an FT-SPK will exhibit a smoke point up to 21.4% higher or 5.2mm higher than that of Comparative Example B.

### Example 8 - Three-Component Jet Fuel Blends

A jet fuel containing a bio-derived SAK, a petroleum-derived kerosene, and an SPK can be prepared using linear blending calculations and known total aromatics contents of the three blend components. For example, in the case where SAK contains 100 vol.% total aromatics, the petroleum-derived kerosene contains 17 vol.% total aromatics, and the SPK contains < 0.1 vol.% total aromatics, the following blend ratios result in jet fuel blends with total aromatic contents and reductions in number-based nvPM emissions (summarized in Table 15).

**Table 15: Three-Component Jet Fuel Blends and Resulting Total Aromatic Contents and Reductions in Number-Based nvPM Emissions**

| SAK in jet fuel blend (vol.%) | Petroleum-derived kerosene in jet fuel blend (vol.%) | SPK in jet fuel blend (vol.%) | Total aromatics content in jet fuel blend (vol.%) | Relative number-based nvPM emissions (%) |
|---|---|---|---|---|
| 3 | 82.4 | 14.6 | 17.0 | -12 |
| 5 | 70.6 | 24.4 | 17.0 | -21 |
| 10 | 41.2 | 48.8 | 17.0 | -41 |
| 15 | 11.8 | 73.2 | 17.0 | -62 |

## Claims

1. Use of an aromatic kerosene fuel blending component comprising at least 90 wt.% amount of aromatics measured by ASTM D2425, less than 10 wt.% of indanes and tetralins and less than 1 wt.% of naphthalene to decrease the number-based nvPM emissions of a jet fuel while meeting Jet Fuel specification property.

2. Use of an aromatic kerosene fuel blending component comprising at least 90 wt.% amount of aromatics measured by ASTM D2425, less than 10 wt.% of indanes and tetralins and less than 1 wt.% of naphthalene to increase the smoke point of a jet fuel.

3. Use of an aromatic kerosene fuel blending component comprising at least 90 wt.% amount of aromatics measured by ASTM D2425, less than 10 wt.% of indanes and tetralins and less than 1 wt.% of naphthalene to decrease the NOx emission value of a jet fuel while meeting Jet Fuel specification property.

## Patentansprüche

1. Verwenden einer aromatischen Turbinenkerosin-Beimischkomponente, umfassend mindestens 90 Gew.-% Aromaten, gemessen nach ASTM D2425, weniger als 10 Gew.-% Indane und Tetraline und weniger als 1 Gew.-% Naphthalin, um die Anzahl der nvPM-Emissionen eines Flugturbinentreibstoffs zu verringern, wobei die Spezifikationseigenschaften für Flugturbinentreibstoff erfüllt werden.

2. Verwenden einer aromatischen Turbinenkerosin-Beimischkomponente, umfassend mindestens 90 Gew.-% Aromaten, gemessen nach ASTM D2425, weniger als 10 Gew.-% Indane und Tetraline und weniger als 1 Gew.-% Naphthalin, um den Rauchpunkt eines Flugturbinentreibstoffs zu erhöhen.

3. Verwenden einer aromatischen Turbinenkerosin-Beimischkomponente, umfassend mindestens 90 Gew.-% Aromaten, gemessen nach ASTM D2425, weniger als 10 Gew.-% Indane und Tetraline und weniger als 1 Gew.-% Naphthalin, um den NOx-Emissionswert eines Flugturbinentreibstoffs zu verringern, wobei die Spezifikationseigenschaften für Flugturbinentreibstoff erfüllt werden.

## Revendications

1. Utilisation d'un composant de mélange de kérosène aromatique comprenant une quantité de composés aromatiques d'au moins 90 % en poids mesurée' selon la norme ASTM D2425, de moins de 10 % en poids d'indanes et de tétralines et de moins de 1 % en poids de naphtalène pour réduire les émissions nvPM basées sur le nombre d'un carburéacteur tout en satisfaisant à la propriété de spécification en matière de carburéacteur.

2. Utilisation d'un composant de mélange de kérosène aromatique comprenant une quantité de composés aromatiques d'au moins 90 % en poids mesurée' selon la norme ASTM D2425, de moins de 10 % en poids d'indanes et de tétralines et de moins de 1 % en poids de naphtalène pour augmenter le point de fumée d'un carburéacteur.

3. Utilisation d'un composant de mélange de kérosène aromatique comprenant une quantité de composés aromatiques d'au moins 90 % en poids mesurée' selon la norme ASTM D2425, de moins de 10 % en poids d'indanes et de tétralines et de moins de 1 % en poids de naphtalène pour diminuer la valeur d'émission de NOx d'un carburéacteur tout en satisfaisant à la propriété de spécification en matière de carburéacteur.
